(19) Europäisches Patentamt

European Patent Office

Office européen des brevets

(11) **EP 4 216 448 A1**

(12) **EUROPEAN PATENT APPLICATION**
published in accordance with Art. 153(4) EPC

(43) Date of publication:
**26.07.2023 Bulletin 2023/30**

(21) Application number: **21869711.8**

(22) Date of filing: **15.09.2021**

(51) International Patent Classification (IPC):
*H04B 7/0456* (2017.01)    *H04B 7/06* (2006.01)
*H04L 25/03* (2006.01)    *H04L 27/26* (2006.01)

(52) Cooperative Patent Classification (CPC):
**H04B 7/0456; H04B 7/06; H04L 25/03; H04L 27/26**

(86) International application number:
**PCT/KR2021/012603**

(87) International publication number:
**WO 2022/060089 (24.03.2022 Gazette 2022/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.09.2020 KR 20200118651**

(71) Applicant: **LG Electronics Inc.**
**Yeongdeungpo-gu**
**Seoul, 07336 (KR)**

(72) Inventors:
• **PARK, Haewook**
**Seoul 06772 (KR)**
• **KANG, Jiwon**
**Seoul 06772 (KR)**
• **KIM, Seonwook**
**Seoul 06772 (KR)**

(74) Representative: **Mooser, Sebastian Thomas**
**Wuesthoff & Wuesthoff**
**Patentanwälte PartG mbB**
**Schweigerstraße 2**
**81541 München (DE)**

(54) **METHOD FOR TERMINAL TRANSMITTING UPLINK SIGNAL ON BASIS OF CODEBOOK IN WIRELESS COMMUNICATION SYSTEM, AND DEVICE THEREFOR**

(57)    Disclosed, according to various embodiments, are a method for a terminal transmitting an uplink signal on the basis of a codebook in a wireless communication system, and a device therefor. Disclosed are a method and a device therefor, the method comprising the steps of: receiving configuration information for configuring DFT-s-OFDM; receiving DCI comprising a TPMI field; and transmitting, to at least one TRP, an uplink signal to which is applied a precoding matrix corresponding to a TPMI included in the TPMI field, wherein, when the configuration information indicates 1 as the maximum rank, the TPMI indicates one precoding matrix among N precoding matrices for rank 1, and when the configuration information indicates 2 as the maximum rank, the TPMI may indicate one precoding matrix among N-K precoding matrices for rank 1 and M precoding matrices for rank 2.

FIG. 9

**Description**

[Technical Field]

The present disclosure relates to a method for transmitting an uplink signal by a terminal based on a codebook in a wireless communication system, and a device therefor.

[Background Art]

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

As more and more communication devices require larger communication capacities in transmitting and receiving signals, there is a need for mobile broadband communication improved from the legacy radio access technology. Accordingly, communication systems considering services/LTEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR).

[Disclosure]

[Technical Problem]

An object of the present disclosure is to provide a method and device for increasing data throughput while minimizing PAPR by configuring a codebook of rank 2 or higher within the payload of existing DCI even in uplink transmission based on DFT-s-OFDM.

It will be appreciated by those of ordinary skill in the art to which the embodiment(s) pertain that the objects that could be achieved with the embodiment(s) are not limited to what has been particularly described hereinabove and the above and other objects will be more clearly understood from the following detailed description.

[Technical Solution]

In one aspect of the present disclosure, provided herein is a method for transmitting an uplink signal by a terminal based on a codebook in a wireless communication system. The method may include receiving configuration information for configuring discrete Fourier transform-spread-orthogonal frequency division multiplexing (DFT-s-OFDM), receiving downlink control information (DCI) including a transmit precoding matrix indicator (TPMI) field, and transmitting, to at least one transmission and reception point (TRP), the uplink signal configured by applying a precoding matrix corresponding to a TPMI included in the TPMI field. Based on the configuration information indicating a maximum rank as 1, the TPMI may indicate one of N precoding matrices for rank 1. Based on the configuration information indicating the maximum rank as 2, the TPMI may indicate one of N-K precoding matrices for the rank 1 and M precoding matrices for rank 2. The N, K and M may be positive integers.

Alternatively, based on the codebook including precoding matrices for four transmission ports and full-coherence, the DCI may include a TPMI field of 5 bits.

Alternatively, the N precoding matrices may include 2K precoding matrices having a phase rotation relationship between antenna port groups having coherency.

Alternatively, the 2K precoding matrices may be divided into a first subset including K precoding matrices and a second subset including K precoding matrices, and the N-K precoding matrices may include only one of the first subset and the second subset.

Alternatively, the K may be 8.

Alternatively, the M may be determined based on the K and the number of reserved states in the TPMI field.

Alternatively, when the N is 28 and the K is 8, the M may be 12.

Alternatively, based on the maximum rank being indicated as 2, the full-coherence codebook may be configured as follows:

| TPMI index | W | | | | | | | |
|---|---|---|---|---|---|---|---|---|
| 0-7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| 8-15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\-1\end{bmatrix}$ | $\frac{1}{2}\begin{bmatrix}1\\1\\j\\j\end{bmatrix}$ | $\frac{1}{2}\begin{bmatrix}1\\1\\-1\\1\end{bmatrix}$ | $\frac{1}{2}\begin{bmatrix}1\\1\\-j\\-j\end{bmatrix}$ |
| 16-23 | $\frac{1}{2}\begin{bmatrix}1\\j\\1\\j\end{bmatrix}$ | $\frac{1}{2}\begin{bmatrix}1\\j\\j\\1\end{bmatrix}$ | $\frac{1}{2}\begin{bmatrix}1\\j\\-1\\1\end{bmatrix}$ | $\frac{1}{2}\begin{bmatrix}1\\j\\-j\\-1\end{bmatrix}$ | $\frac{1}{2}\begin{bmatrix}1&0\\0&1\\0&0\\0&0\end{bmatrix}$ | $\frac{1}{2}\begin{bmatrix}1&0\\0&0\\0&1\\0&0\end{bmatrix}$ | $\frac{1}{2}\begin{bmatrix}1&0\\0&0\\0&0\\0&1\end{bmatrix}$ | $\frac{1}{2}\begin{bmatrix}0&0\\1&0\\0&1\\0&0\end{bmatrix}$ |
| 24 - 31 | $\frac{1}{2}\begin{bmatrix}0&0\\1&0\\0&0\\0&1\end{bmatrix}$ | $\frac{1}{2}\begin{bmatrix}0&0\\0&0\\1&0\\0&1\end{bmatrix}$ | $\frac{1}{2}\begin{bmatrix}1&0\\0&1\\1&0\\0&-j\end{bmatrix}$ | $\frac{1}{2}\begin{bmatrix}1&0\\0&1\\1&0\\0&j\end{bmatrix}$ | $\frac{1}{2}\begin{bmatrix}1&0\\0&1\\1&0\\0&1\end{bmatrix}$ | $\frac{1}{2}\begin{bmatrix}1&0\\0&1\\-j&0\\0&-1\end{bmatrix}$ | $\frac{1}{2}\begin{bmatrix}1&0\\0&1\\-j&0\\0&1\end{bmatrix}$ | $\frac{1}{2}\begin{bmatrix}1&0\\0&1\\0&-1\\1&0\end{bmatrix}$ |

Alternatively, a size of a payload of the TPMI included in the DCI may be determined based on a coherence capability of the terminal.

In another aspect of the present disclosure, provided herein is a method for receiving, by a transmission and reception point (TRP), an uplink signal transmitted based on a codebook in a wireless communication system. The method may include transmitting configuration information for configuring discrete Fourier transform-spread-orthogonal frequency division multiplexing (DFT-s-OFDM), transmitting downlink control information (DCI) including a transmit precoding matrix indicator (TPMI) field, and receiving the uplink signal configured by applying a precoding matrix corresponding to a TPMI included in the TPMI field. Based on the configuration information indicating a maximum rank as 1, the TPMI may indicate one of N precoding matrices for rank 1. Based on the configuration information indicating the maximum rank as 2, the TPMI may indicate one of N-K precoding matrices for the rank 1 and M precoding matrices for rank 2.

Alternatively, when the uplink signal is transmitted using the four transmission ports and the codebook corresponds to a full-coherence codebook subset, the DCI may include a TPMI field of 5 bits.

In another aspect of the present disclosure, provided herein is a terminal for transmitting an uplink signal based on a codebook in a wireless communication system. The terminal may include a radio frequency (RF) transceiver, and a processor connected to the RF transceiver. The processor may control the RF transceiver to receive configuration information for configuring discrete Fourier transform-spread-orthogonal frequency division multiplexing (DFT-s-OFDM), receive downlink control information (DCI) including a transmit precoding matrix indicator (TPMI) field, and transmit, to at least one transmission and reception point (TRP), the uplink signal configured by applying a precoding matrix corresponding to a TPMI included in the TPMI field. Based on the configuration information indicating a maximum rank as 1, the TPMI may indicate one of N precoding matrices for rank 1. Based on the configuration information indicating the maximum rank as 2, the TPMI may indicate one of N-K precoding matrices for the rank 1 and M precoding matrices for rank 2.

In another aspect of the present disclosure, provided herein is a transmission and reception point (TRP) for receiving an uplink signal transmitted based on a codebook in a wireless communication system. The TRP may include a radio frequency (RF) transceiver, and a processor connected to the RF transceiver. The processor controls the RF transceiver to transmit configuration information for configuring discrete Fourier transform-spread-orthogonal frequency division multiplexing (DFT-s-OFDM), transmit downlink control information (DCI) including a transmit precoding matrix indicator (TPMI) field, and receive the uplink signal configured by applying a precoding matrix corresponding to a TPMI included in the TPMI field. Based on the configuration information indicating a maximum rank as 1, the TPMI may indicate one of N precoding matrices for rank 1. Based on the configuration information indicating the maximum rank as 2, the TPMI may indicate one of N-K precoding matrices for the rank 1 and M precoding matrices for rank 2.

In another aspect of the present disclosure, provided herein is a chipset for transmitting an uplink signal based on a codebook in a wireless communication system. The chipset may include at least one processor, and at least one memory operatively connected to the at least one processor and configured to cause, when executed, the at least one processor to perform an operation. The operation may include receiving configuration information for configuring discrete Fourier transform-spread-orthogonal frequency division multiplexing (DFT-s-OFDM), receiving downlink control information (DCI) including a transmit precoding matrix indicator (TPMI) field, and transmitting, to at least one transmission and reception point (TRP), the uplink signal configured by applying a precoding matrix corresponding to a TPMI included in the TPMI field. Based on the configuration information indicating a maximum rank as 1, the TPMI may indicate one of N precoding matrices for rank 1. Based on the configuration information indicating the maximum rank as 2, the TPMI may indicate one of N-K precoding matrices for the rank 1 and M precoding matrices for rank 2.

In another aspect of the present disclosure, provided herein is a computer-readable storage medium including at least one computer program for performing an operation of transmitting an uplink signal based on a codebook in a wireless communication system. The storage medium may include at least one computer program configured to cause the at least one processor to perform the operation of transmitting the uplink signal based on the codebook, and a computer-readable storage medium storing the at least one computer program. The operation may include receiving configuration information for configuring discrete Fourier transform-spread-orthogonal frequency division multiplexing (DFT-s-OFDM), receiving downlink control information (DCI) including a transmit precoding matrix indicator (TPMI) field, and transmitting, to at least one transmission and reception point (TRP), the uplink signal configured by applying a precoding matrix corresponding to a TPMI included in the TPMI field. Based on the configuration information indicating a maximum rank as 1, the TPMI may indicate one of N precoding matrices for rank 1. Based on the configuration information indicating the maximum rank as 2, the TPMI may indicate one of N-K precoding matrices for the rank 1 and M precoding matrices for rank 2.

[Advantageous Effects]

Various embodiments may increase data throughput while minimizing PAPR by configuring a codebook of rank 2 or higher within the payload of existing DCI even in uplink transmission based on DFT-s-OFDM.
Effects to be achieved by embodiment(s) are not limited to what has been particularly described hereinabove and other effects not mentioned herein will be more clearly understood by persons skilled in the art to which embodiment(s) pertain from the following detailed description.

[Description of Drawings]

The accompanying drawings, which are included to provide a further understanding of the disclosure and are incorporated in and constitute a part of this application, illustrate embodiments of the disclosure and together with the description serve to explain the principle of the disclosure.

FIG. 1 illustrates the structure of an LTE system to which embodiment(s) are applicable.
FIG. 2 illustrates the structure of an NR system to which embodiment(s) are applicable.
FIG. 3 illustrates the structure of an NR radio frame to which embodiment(s) are applicable.
FIG. 4 illustrates the slot structure of an NR frame to which embodiment(s) are applicable.
FIG. 5 illustrates a procedure in which a base station transmits a downlink signal to a LTE.
FIG. 6 illustrates a procedure in which a UE transmits an uplink signal to a base station.
FIG. 7 shows an example of a procedure for controlling uplink transmit power.
FIG. 8 is a diagram illustrating a method for improving reliability in multiple TRPs.
FIG. 9 is a diagram illustrating signaling between a UE and a network side based on multiple TRPs.
FIG. 10 is a diagram illustrating a method for transmitting an uplink signal by a UE based on a codebook.
FIG. 11 is a diagram illustrating a method for receiving an uplink signal transmitted by a TRP based on a codebook.
FIG. 12 illustrates a communication system applied to the present disclosure.
FIG. 13 illustrates wireless devices applicable to the present disclosure.
FIG. 14 illustrates another example of a wireless device to which the present disclosure is applied.

[Best Mode]

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/LTEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto

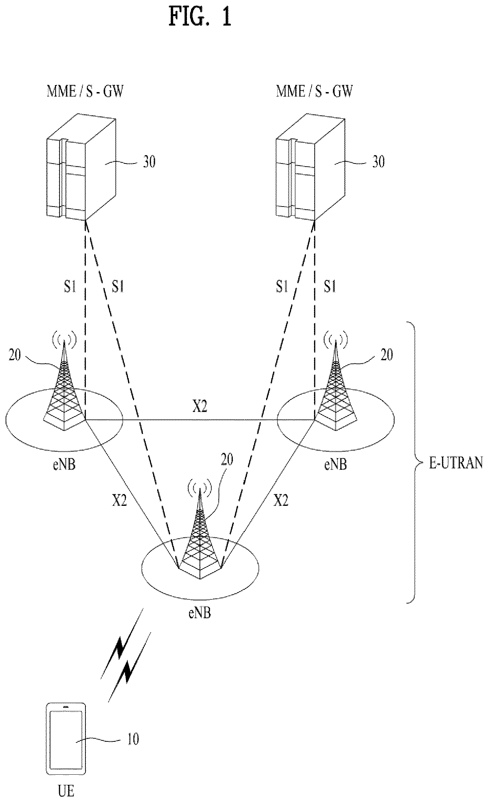

FIG. 1 illustrates the structure of an LTE system to which the present disclosure is applicable. This may also be called an evolved UMTS terrestrial radio access network (E-UTRAN) or LTE/LTE-A system.

Referring to FIG. 1, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a LTE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

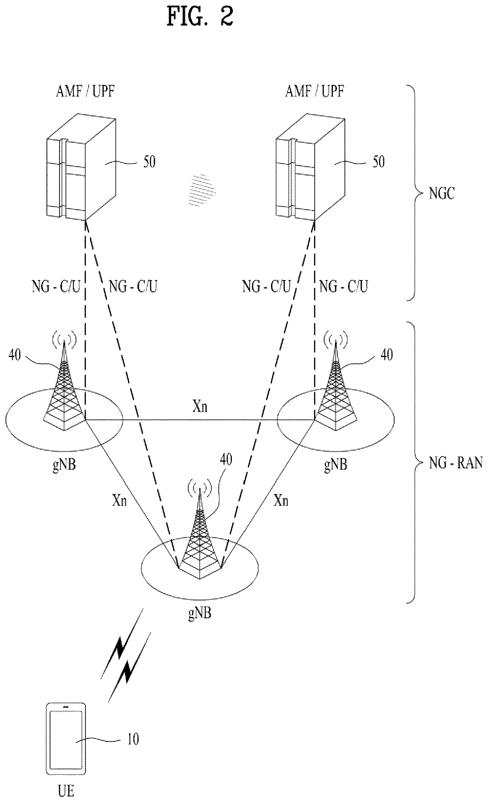

FIG. 2 illustrates the structure of a NR system to which the present disclosure is applicable.

Referring to FIG. 2, a next generation radio access network (NG-RAN) may include a next generation Node B (gNB) and/or an eNB, which provides user-plane and control-plane protocol termination to a LTE. In FIG. 2, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

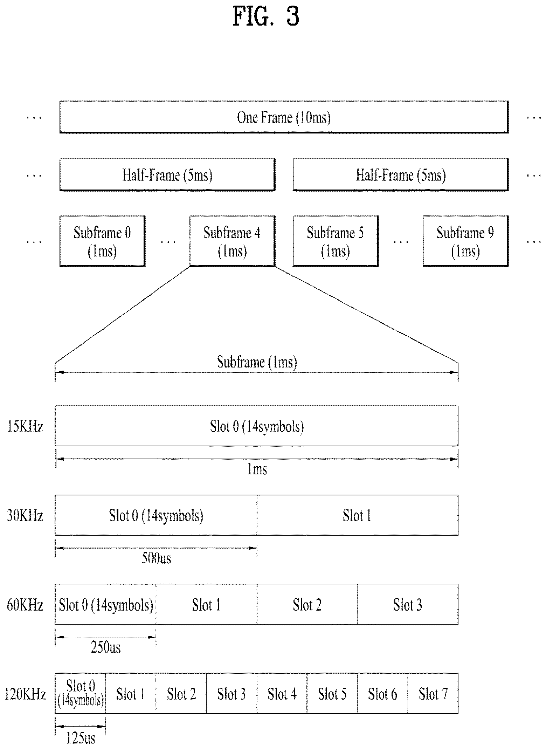

FIG. 3 illustrates the structure of a NR radio frame to which the present disclosure is applicable.

Referring to FIG. 3, a radio frame may be used for LTL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the NCP case.

[Table 1]

| SCS (15*2u) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 below lists the number of symbols per slot, the number of slots per frame, and the number of slots per subframe according to an SCS in the ECP case.

[Table 2]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

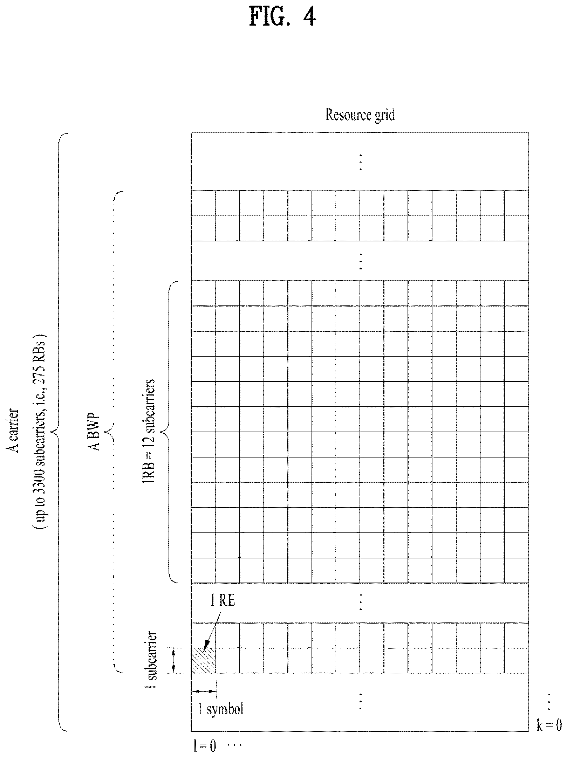

FIG. 4 illustrates the slot structure of a NR frame.

Referring to FIG. 4, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

**Bandwidth part (BWP)**

In the NR system, up to 400 MHz may be supported per component carrier (CC). If a UE operating on a wideband CC always operates with the RF for the entire CCs turned on, the battery consumption of the UE may be increased. Alternatively, considering various use cases (e.g., eMBB, URLLC, Mmtc, V2X, etc.) operating within one wideband CC, different numerologies (e.g., sub-carrier spacings) may be supported for different frequency bands within a specific CC. Alternatively, the capability for the maximum bandwidth may differ among the UEs. In consideration of this, the BS may instruct the UE to operate only in a partial bandwidth, not the entire bandwidth of the wideband CC. The partial bandwidth is defined as a bandwidth part (BWP) for simplicity. Here, the BWP may be composed of resource blocks (RBs) contiguous on the frequency axis, and may correspond to one numerology (e.g., sub-carrier spacing, CP length, slot/mini-slot duration).

The BS may configure multiple BWPs in one CC configured for the LTE. For example, a BWP occupying a relatively small frequency region may be configured in a PDCCH monitoring slot, and a PDSCH indicated by the PDCCH in a larger BWP may be scheduled. Alternatively, when UEs are concentrated in a specific BWP, some of the UEs may be configured in another BWP for load balancing. Alternatively, a spectrum in the middle of the entire bandwidth may be punctured and two BWPs on both sides may be configured in the same slot in consideration of frequency-domain inter-cell interference cancellation between neighbor cells. That is, the BS may configure at least one DL/LTL BWP for the UE associated with the wideband CC and activate at least one DL/LTL BWP among the configured DL/UL BWP(s) at a specific time (through L1 signaling, MAC CE or RRC signalling, etc.). The BS may instruct the UE to switch to another configured DL/LTL BWP (through L1 signaling, MAC CE or RRC signalling, etc.). Alternatively, when a timer expires, the UE may switch to a predetermined DL/LTL BWP. The activated DL/LTL BWP is defined as an active DL/UL BWP. The LTE may fail to receive DL/UL BWP configuration during an initial access procedure or before an RRC connection is set up. A DL/LTL BWP assumed by the UE in this situation is defined as an initial active DL/UL BWP.

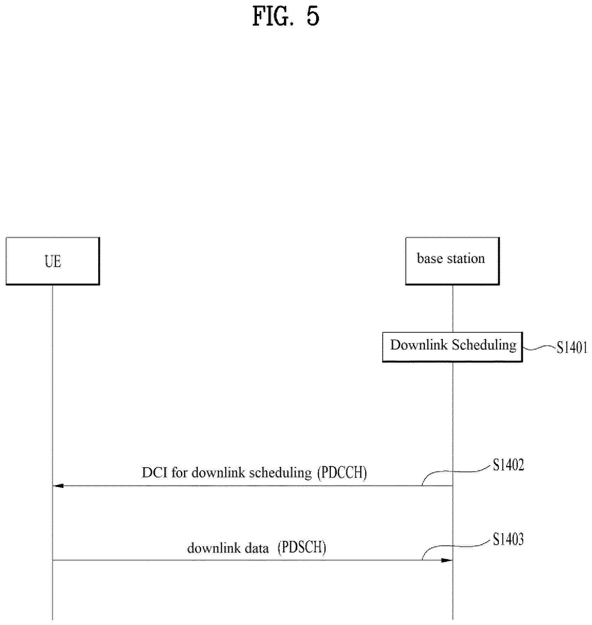

FIG. 5 illustrates a procedure in which a base station transmits a downlink (DL) signal to a LTE

Referring to FIG. 5, the BS schedules DL transmission in relation to, for example, frequency/time resources, a transport layer, a DL precoder, and an MCS (S1401). In particular, the BS may determine a beam for PDSCH transmission to the UE through the above-described operations.

The UE receives downlink control information (DCI) for DL scheduling (i.e., including scheduling information about the PDSCH) from the BS on the PDCCH (S1402).

DCI format 1_0 or 1_1 may be used for DL scheduling. In particular, DCI format 1_1 includes the following information:

an identifier for DCI formats, a bandwidth part indicator, frequency domain resource assignment, time domain resource assignment, a PRB bundling size indicator, a rate matching indicator, a ZP CSI-RS trigger, antenna port(s), transmission configuration indication (TCI), an SRS request, and a demodulation reference signal (DMRS) sequence initialization.

In particular, according to each state indicated in the antenna port(s) field, the number of DMRS ports may be scheduled, and single-user (SU)/multi-user (MU) transmission may also be scheduled.

In addition, the TCI field is configured in 3 bits, and the QCL for the DMRS is dynamically indicated by indicating a maximum of 8 TCI states according to the value of the TCI field.

The UE receives DL data from the BS on the PDSCH (S1403).

When the UE detects a PDCCH including DCI format 1_0 or 1_1, it decodes the PDSCH according to an indication by the DCI.

Here, when the LTE receives a PDSCH scheduled by DCI format 1, a DMRS configuration type may be configured for the UE by a higher layer parameter 'dmrs-Type', and the DMRS type is used to receive the PDSCH. In addition, the maximum number of front-loaded DMRS symbols for the PDSCH may be configured for the UE by the higher layer parameter 'maxLength'.

In the case of DMRS configuration type 1, when a single codeword is scheduled for the LTE and an antenna port mapped to an index of {2, 9, 10, 11, or 30} is specified, or when two codewords are scheduled for the UE, the UE assumes that any of the remaining orthogonal antenna ports is not associated with PDSCH transmission to another UE.

Alternatively, in the case of DMRS configuration type 2, when a single codeword is scheduled for the UE and an antenna port mapped to an index of {2, 10, or 23} is specified, or when two codewords are scheduled for the LTE, the LTE assumes that any of the remaining orthogonal antenna ports is not associated with PDSCH transmission to another UE.

When the LTE receives the PDSCH, it may assume that the precoding granularity P' is a consecutive resource block in the frequency domain. Here, P' may correspond to one of {2, 4, wideband}.

When P' is determined as wideband, the UE does not expect scheduling with non-contiguous PRBs, and may assume that the same precoding is applied to the allocated resources.

On the other hand, when P' is determined as any one of {2, 4}, a precoding resource block group (PRG) is divided into P' contiguous PRBs. The number of actually contiguous PRBs in each PRG may be greater than or equal to 1. The UE may assume that the same precoding is applied to contiguous DL PRBs in the PRG.

In order to determine a modulation order, a target code rate, and a transport block size in the PDSCH, the UE first reads the 5-bit MCD field in the DCI, and determines the modulation order and the target code rate. Then, it reads the redundancy version field in the DCI, and determines the redundancy version. Then, the LTE determines the transport block size based on the number of layers and the total number of allocated PRBs before rate matching.

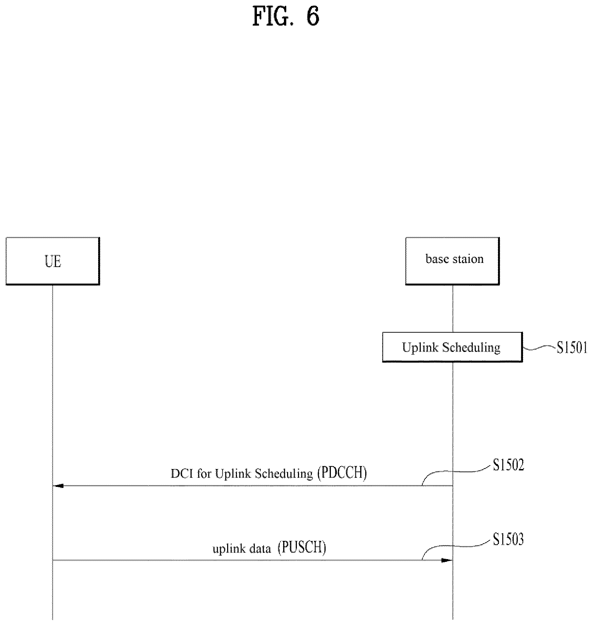

FIG. 6 illustrates a procedure in which a LTE transmits an uplink (LTL) signal to a BS.

Referring to FIG. 6, the BS schedules LTL transmission in relation to, for example, frequency/time resources, a transport layer, a UL precoder, and an MCS (S1501). In particular, the BS may determine, through the above-described operations, a beam for PUSCH transmission of the UE.

The LTE receives DCI for LTL scheduling (including scheduling information about the PUSCH) from the BS on the PDCCH (S1502).

DCI format 0_0 or 0_1 may be used for UL scheduling. In particular, DCI format 0_1 includes the following information: an identifier for DCI formats, a UL/supplementary UL (SUL), a bandwidth part indicator, frequency domain resource assignment, time domain resource assignment, a frequency hopping flag, a modulation and coding scheme (MCS), an SRS resource indicator (SRI), precoding information and number of layers, antenna port(s), an SRS request, DMRS sequence initialization, and UL shared channel (LTL-SCH) indicator.

In particular, SRS resources configured in an SRS resource set associated with the higher layer parameter 'usage' may be indicated by the SRS resource indicator field. In addition, 'spatialRelationInfo' may be configured for each SRS resource, and the value thereof may be one of {CRI, SSB, SRI}.

The LTE transmits LTL data to the BS on PUSCH (S1503).

When the LTE detects a PDCCH including DCI format 0_0 or 0_1, it transmits the PUSCH according to an indication by the DCI

For PUSCH transmission, two transmission schemes are supported: codebook-based transmission and non-codebook-based transmission:

i) When the higher layer parameter 'txConfig' is set to 'codebook', the UE is configured for codebook-based transmission. On the other hand, when the higher layer parameter 'txConfig' is set to 'nonCodebook', the LTE is configured for non-codebook based transmission. When the higher layer parameter 'txConfig' is not configured, the UE does not expect scheduling by DCI format 0_1. When the PUSCH is scheduled according to DCI format 0_0, PUSCH transmission is based on a single antenna port.

In the case of codebook-based transmission, the PUSCH may be scheduled by DCI format 0_0 or DCI format 0_1, or scheduled semi-statically. When the PUSCH is scheduled by DCI format 0_1, the UE determines the PUSCH transmission precoder based on the SRI, transmit precoding matrix indicator (TPMI) and transmission rank from the DCI, as given by the SRS resource indicator field and the precoding information and number of layers field. The TPMI is used to indicate a precoder to be applied across antenna ports, and corresponds to an SRS resource selected by the SRI when multiple SRS resources are configured. Alternatively, when a single SRS resource is configured, the TPMI is used to indicate a precoder to be applied across antenna ports, and corresponds to the single SRS resource. A transmission precoder is selected from the UL codebook having the same number of antenna ports as the higher layer parameter 'nrofSRS-Ports'. When the higher layer in which the LTE is set to 'codebook' is configured with the parameter 'txConfig', at least one SRS resource is configured for the UE. The SRI indicated in slot n is associated with the most recent transmission of the SRS resource identified by the SRI, where the SRS resource precedes the PDCCH carrying the SRI (i.e., slot n).

ii) In the case of non-codebook-based transmission, the PUSCH may be scheduled by DCI format 0_0 or DCI format 0_1, or scheduled semi-statically. When multiple SRS resources are configured, the UE may determine the PUSCH precoder and transmission rank based on the wideband SRI. Here, the SRI is given by the SRS resource indicator in the DCI or by the higher layer parameter 'srs-ResourceIndicator'. The UE may use one or multiple SRS resources for SRS transmission. Here, the number of SRS resources may be configured for simultaneous transmission within the same RB based on UE capability. Only one SRS port is configured for each SRS resource. Only one SRS resource may be configured by the higher layer parameter 'usage' set to 'nonCodebook'. The maximum number of SRS resources that may be configured for non-codebook-based UL transmission is 4. The SRI indicated in slot n is associated with the most recent transmission of the SRS resource identified by the SRI, where the SRS transmission precedes the PDCCH carrying the SRI (i.e., slot n).

Hereinafter, a codebook related to an uplink signal will be described.

Regarding precoding, a block of vectors ( $\left[ y^{(0)}(i) \quad \ldots \quad y^{(\upsilon-1)}(i) \right]^T$ , where $i = 0, 1, \ldots, M_{\text{symb}}^{\text{layer}} - 1$ ) may be precoded based on Equation 1 below.

[Equation 1]

$$\begin{bmatrix} z^{(p_0)}(i) \\ \vdots \\ z^{(p_{\rho-1})}(i) \end{bmatrix} = W \begin{bmatrix} y^{(0)}(i) \\ \vdots \\ y^{(\upsilon-1)}(i) \end{bmatrix}$$

Here, $i = 0, 1, \ldots, M_{\text{symb}}^{\text{ap}} - 1$ , $M_{\text{symb}}^{\text{ap}} = M_{\text{symb}}^{\text{layer}}$ , and $\{p_0, \ldots, p_{\rho-1}\}$ may be a predetermined set of antenna ports (see TS 38.214).

In the case of non-codebook based transmission, the precoding matrix W is equal to the identity matrix.

In the case of codebook-based transmission, the precoding matrix W may be specified as W=1 for single-layer transmission through a single antenna port. Alternatively, the precoding matrix W may be determined according to Tables 5 to 11 below using a TPMI index obtained from DCI for scheduling uplink transmission or higher layer parameters (see TS 38.214). When the higher layer parameter txConfig is not configured, the precoding matrix W may be 1.

[Table 5]

| TPMI index | W (ordered from left to right in increasing order of TPMI index) | | | | | | | |
|---|---|---|---|---|---|---|---|---|
| 0-5 | $\frac{1}{\sqrt{2}}\begin{bmatrix} 1 \\ 0 \end{bmatrix}$ | $\frac{1}{\sqrt{2}}\begin{bmatrix} 0 \\ 1 \end{bmatrix}$ | $\frac{1}{\sqrt{2}}\begin{bmatrix} 1 \\ 1 \end{bmatrix}$ | $\frac{1}{\sqrt{2}}\begin{bmatrix} 1 \\ -1 \end{bmatrix}$ | $\frac{1}{\sqrt{2}}\begin{bmatrix} 1 \\ j \end{bmatrix}$ | $\frac{1}{\sqrt{2}}\begin{bmatrix} 1 \\ -j \end{bmatrix}$ | - | - |

Here, Table 5 shows a precoding matrix W for single layer transmission using two antenna ports.

[Table 6]

| TPMI index | W (ordered from left to right in increasing order of TPMI index) | | | | | | | |
|---|---|---|---|---|---|---|---|---|
| 0-7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| 8 - 15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\-1\end{bmatrix}$ | $\frac{1}{2}\begin{bmatrix}1\\1\\j\\j\end{bmatrix}$ | $\frac{1}{2}\begin{bmatrix}1\\1\\-1\\1\end{bmatrix}$ | $\frac{1}{2}\begin{bmatrix}1\\1\\-j\\-j\end{bmatrix}$ |
| 16-23 | $\frac{1}{2}\begin{bmatrix}1\\j\\1\\j\end{bmatrix}$ | $\frac{1}{2}\begin{bmatrix}1\\j\\j\\1\end{bmatrix}$ | $\frac{1}{2}\begin{bmatrix}1\\j\\-1\\-j\end{bmatrix}$ | $\frac{1}{2}\begin{bmatrix}1\\j\\-j\\-1\end{bmatrix}$ | $\frac{1}{2}\begin{bmatrix}1\\-1\\1\\1\end{bmatrix}$ | $\frac{1}{2}\begin{bmatrix}1\\-1\\j\\-j\end{bmatrix}$ | $\frac{1}{2}\begin{bmatrix}1\\-1\\-1\\-1\end{bmatrix}$ | $\frac{1}{2}\begin{bmatrix}1\\-1\\-j\\j\end{bmatrix}$ |
| 24-27 | $\frac{1}{2}\begin{bmatrix}1\\-j\\1\\-j\end{bmatrix}$ | $\frac{1}{2}\begin{bmatrix}1\\-j\\j\\-1\end{bmatrix}$ | $\frac{1}{2}\begin{bmatrix}1\\-j\\-1\\j\end{bmatrix}$ | $\frac{1}{2}\begin{bmatrix}1\\-j\\-j\\1\end{bmatrix}$ | - | - | - | - |

Here, Table 6 shows a precoding matrix W for single layer transmission using four antenna ports for which transform precoding is enabled.

[Table 7]

| TPMI index | W (ordered from left to right in increasing order of TPMI index) | | | | | | | |
|---|---|---|---|---|---|---|---|---|
| 0-7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| 8 - 15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\1\end{bmatrix}$ | $\frac{1}{2}\begin{bmatrix}1\\1\\j\\j\end{bmatrix}$ | $\frac{1}{2}\begin{bmatrix}1\\1\\-1\\-1\end{bmatrix}$ | $\frac{1}{2}\begin{bmatrix}1\\1\\-j\\-j\end{bmatrix}$ |
| 16-23 | $\frac{1}{2}\begin{bmatrix}1\\j\\1\\j\end{bmatrix}$ | $\frac{1}{2}\begin{bmatrix}1\\j\\j\\-1\end{bmatrix}$ | $\frac{1}{2}\begin{bmatrix}1\\j\\-1\\-j\end{bmatrix}$ | $\frac{1}{2}\begin{bmatrix}1\\j\\-j\\1\end{bmatrix}$ | $\frac{1}{2}\begin{bmatrix}1\\-1\\1\\-1\end{bmatrix}$ | $\frac{1}{2}\begin{bmatrix}1\\-1\\j\\-j\end{bmatrix}$ | $\frac{1}{2}\begin{bmatrix}1\\-1\\-1\\1\end{bmatrix}$ | $\frac{1}{2}\begin{bmatrix}1\\-1\\-j\\j\end{bmatrix}$ |
| 24-27 | $\frac{1}{2}\begin{bmatrix}1\\-j\\1\\-j\end{bmatrix}$ | $\frac{1}{2}\begin{bmatrix}1\\-j\\j\\1\end{bmatrix}$ | $\frac{1}{2}\begin{bmatrix}1\\-j\\-1\\j\end{bmatrix}$ | $\frac{1}{2}\begin{bmatrix}1\\-j\\-j\\-1\end{bmatrix}$ | - | - | - | - |

Here, Table 7 shows a precoding matrix W for single layer transmission using four antenna ports for which transform precoding is disabled.

[Table 8]

| TPMI index | W (ordered from left to right in increasing order of TPMI index) | | |
|---|---|---|---|
| 0-2 | $\frac{1}{\sqrt{2}}\begin{bmatrix} 1 & 0 \\ 0 & 1 \end{bmatrix}$ | $\frac{1}{2}\begin{bmatrix} 1 & 1 \\ 1 & -1 \end{bmatrix}$ | $\frac{1}{2}\begin{bmatrix} 1 & 1 \\ j & -j \end{bmatrix}$ |

Here, Table 8 shows a precoding matrix W for two-layer transmission using two antenna ports for which transform precoding is disabled.

[Table 9]

| TPMI index | W (ordered from left to right in increasing order of TPMI index) | | | |
|---|---|---|---|---|
| 0-3 | $\frac{1}{2}\begin{bmatrix} 1 & 0 \\ 0 & 1 \\ 0 & 0 \\ 0 & 0 \end{bmatrix}$ | $\frac{1}{2}\begin{bmatrix} 1 & 0 \\ 0 & 0 \\ 0 & 1 \\ 0 & 0 \end{bmatrix}$ | $\frac{1}{2}\begin{bmatrix} 1 & 0 \\ 0 & 0 \\ 0 & 0 \\ 0 & 1 \end{bmatrix}$ | $\frac{1}{2}\begin{bmatrix} 0 & 0 \\ 1 & 0 \\ 0 & 1 \\ 0 & 0 \end{bmatrix}$ |
| 4-7 | $\frac{1}{2}\begin{bmatrix} 0 & 0 \\ 1 & 0 \\ 0 & 0 \\ 0 & 1 \end{bmatrix}$ | $\frac{1}{2}\begin{bmatrix} 0 & 0 \\ 0 & 0 \\ 1 & 0 \\ 0 & 1 \end{bmatrix}$ | $\frac{1}{2}\begin{bmatrix} 1 & 0 \\ 0 & 1 \\ 1 & 0 \\ 0 & -j \end{bmatrix}$ | $\frac{1}{2}\begin{bmatrix} 1 & 0 \\ 0 & 1 \\ 1 & 0 \\ 0 & j \end{bmatrix}$ |
| 8-11 | $\frac{1}{2}\begin{bmatrix} 1 & 0 \\ 0 & 1 \\ -j & 0 \\ 0 & 1 \end{bmatrix}$ | $\frac{1}{2}\begin{bmatrix} 1 & 0 \\ 0 & 1 \\ -j & 0 \\ 0 & -1 \end{bmatrix}$ | $\frac{1}{2}\begin{bmatrix} 1 & 0 \\ 0 & 1 \\ -1 & 0 \\ 0 & -j \end{bmatrix}$ | $\frac{1}{2}\begin{bmatrix} 1 & 0 \\ 0 & 1 \\ -1 & 0 \\ 0 & j \end{bmatrix}$ |
| 12-15 | $\frac{1}{2}\begin{bmatrix} 1 & 0 \\ 0 & 1 \\ j & 0 \\ 0 & 1 \end{bmatrix}$ | $\frac{1}{2}\begin{bmatrix} 1 & 0 \\ 0 & 1 \\ j & 0 \\ 0 & -1 \end{bmatrix}$ | $\frac{1}{2\sqrt{2}}\begin{bmatrix} 1 & 1 \\ 1 & 1 \\ 1 & -1 \\ 1 & -1 \end{bmatrix}$ | $\frac{1}{2\sqrt{2}}\begin{bmatrix} 1 & 1 \\ 1 & 1 \\ j & -j \\ j & -j \end{bmatrix}$ |
| 16-19 | $\frac{1}{2\sqrt{2}}\begin{bmatrix} 1 & 1 \\ j & j \\ 1 & -1 \\ j & -j \end{bmatrix}$ | $\frac{1}{2\sqrt{2}}\begin{bmatrix} 1 & 1 \\ j & j \\ j & -j \\ -1 & 1 \end{bmatrix}$ | $\frac{1}{2\sqrt{2}}\begin{bmatrix} 1 & 1 \\ -1 & -1 \\ 1 & -1 \\ -1 & 1 \end{bmatrix}$ | $\frac{1}{2\sqrt{2}}\begin{bmatrix} 1 & 1 \\ -1 & -1 \\ j & -j \\ -j & j \end{bmatrix}$ |
| 20-21 | $\frac{1}{2\sqrt{2}}\begin{bmatrix} 1 & 1 \\ -j & -j \\ 1 & -1 \\ -j & j \end{bmatrix}$ | $\frac{1}{2\sqrt{2}}\begin{bmatrix} 1 & 1 \\ -j & -j \\ j & -j \\ 1 & -1 \end{bmatrix}$ | - | - |

Here, Table 9 shows a precoding matrix W for two-layer transmission using four antenna ports for which transform precoding is disabled.

[Table 10]

| TPMI index | W (ordered from left to right in increasing order of TPMI index) | | | |
|---|---|---|---|---|
| 0-3 | $\dfrac{1}{2}\begin{bmatrix}1&0&0\\0&1&0\\0&0&1\\0&0&0\end{bmatrix}$ | $\dfrac{1}{2}\begin{bmatrix}1&0&0\\0&1&0\\1&0&0\\0&0&1\end{bmatrix}$ | $\dfrac{1}{2}\begin{bmatrix}1&0&0\\0&1&0\\-1&0&0\\0&0&1\end{bmatrix}$ | $\dfrac{1}{2\sqrt{3}}\begin{bmatrix}1&1&1\\1&-1&1\\1&1&-1\\1&-1&-1\end{bmatrix}$ |
| 4-6 | $\dfrac{1}{2\sqrt{3}}\begin{bmatrix}1&1&1\\1&-1&1\\j&j&-j\\j&-j&-j\end{bmatrix}$ | $\dfrac{1}{2\sqrt{3}}\begin{bmatrix}1&1&1\\-1&1&-1\\1&1&-1\\-1&1&1\end{bmatrix}$ | $\dfrac{1}{2\sqrt{3}}\begin{bmatrix}1&1&1\\-1&1&-1\\j&j&-j\\-j&j&j\end{bmatrix}$ | - |

Here, Table 10 shows a precoding matrix W for three-layer transmission using four antenna ports for which transform precoding is disabled.

[Table 11]

| TP MI index | W (ordered from left to right in increasing order of TPMI index) | | | |
|---|---|---|---|---|
| 0-3 | $\dfrac{1}{2}\begin{bmatrix} 1 & 0 & 0 & 0 \\ 0 & 1 & 0 & 0 \\ 0 & 0 & 1 & 0 \\ 0 & 0 & 0 & 1 \end{bmatrix}$ | $\dfrac{1}{2\sqrt{2}}\begin{bmatrix} 1 & 1 & 0 & 0 \\ 0 & 0 & 1 & 1 \\ 1 & -1 & 0 & 0 \\ 0 & 0 & 1 & -1 \end{bmatrix}$ | $\dfrac{1}{2\sqrt{2}}\begin{bmatrix} 1 & 1 & 0 & 0 \\ 0 & 0 & 1 & 1 \\ j & -j & 0 & 0 \\ 0 & 0 & j & -j \end{bmatrix}$ | $\dfrac{1}{4}\begin{bmatrix} 1 & 1 & 1 & 1 \\ 1 & -1 & 1 & -1 \\ 1 & 1 & -1 & -1 \\ 1 & -1 & -1 & 1 \end{bmatrix}$ |
| 4 | $\dfrac{1}{4}\begin{bmatrix} 1 & 1 & 1 & 1 \\ 1 & -1 & 1 & -1 \\ j & j & -j & -j \\ j & -j & -j & j \end{bmatrix}$ | - | - | - |

Here, Table 11 shows a precoding matrix W for four-layer transmission using four antenna ports for which transform precoding is disabled.

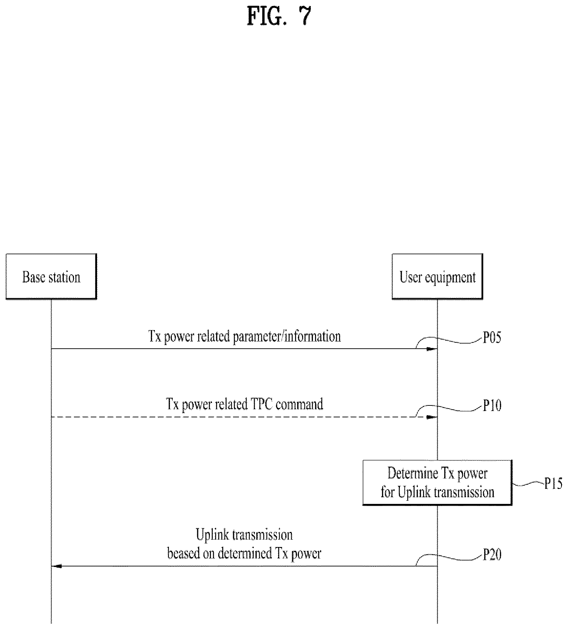

FIG. 7 shows an example of a procedure for controlling uplink transmit power.

First, a user equipment (LTE) may receive a parameter and/or information related to transmit power (Tx power) from a base station (BS) (P05). In this case, the UE may receive the corresponding parameter and/or information through higher layer signaling (e.g., RRC signaling or MAC-CE), etc. For example, in relation to PUSCH transmission, PUCCH transmission, SRS transmission, and/or PRACH transmission, the UE may receive the parameter and/or information related to Tx power control.

Then, the LTE may receive a TPC command (TPC command) related to Tx power from the BS (P10). In this case, the LTE may receive the corresponding TPC command through lower layer signaling (e.g., DCI), etc. For example, in relation to PUSCH transmission, PUCCH transmission, and/or SRS transmission, the UE may receive information about a TPC command to be used for determination of a power control adjustment state, etc. through a TPC command field of a predefined DCI format. However, in the case of PRACH transmission, the corresponding step may be omitted.

Then, the LTE may determine (or calculate) Tx power for uplink transmission based on the parameter, information, and/or TPC command received from the BS (P15). For example, the UE may determine PUSCH Tx power (or PUCCH Tx power, SRS Tx power, and/or PRACH Tx power) based on Equation 1 below. And/or, when two or more uplink channels and/or signals need to be transmitted overlappingly, such as in a situation such as carrier aggregation, the LTE may also determine Tx power for uplink transmission in consideration of priority order (priority) and the like.

Then, the UE may transmit one or more uplink channels and/or signals (e.g., PUSCH, PUCCH, SRS, or PRACH) to the BS based on the determined (or calculated) Tx power (P20).

Hereinafter, content related to power control will be described.

In a wireless communication system, it may be necessary to increase or decrease Tx power of a UE (e.g., User Equipment (UE)) and/or a mobile device if necessary. In this way, control of the Tx power of the LTE and/or the mobile device may be referred to as uplink power control. For example, the Tx power control method may be applied to satisfy a requirement (e.g., SNR (Signal-to-Noise Ratio), BER (Bit Error Ratio), or BLER (Block Error Ratio)) in the BS (e.g., gNB, eNB, etc.) etc.).

The above described power control may be performed in an open-loop power control scheme and a closed-loop power control scheme.

In detail, the open-loop power control scheme refers to a method of controlling Tx power without feedback from a transmitting device (e.g., BS) to a receiving device (e.g., UE) and/or feedback from the receiving device to the transmitting device. For example, the UE may receive a specific channel/signal (pilot channel/signal) from the BS, and may estimate the strength of received power using the received channel/signal. Then, the UE may control the Tx power using the estimated strength of the received power.

In contrast, the closed-loop power control scheme refers to a method of controlling Tx power based on feedback from the transmitting device to the receiving device and/or feedback from the receiving device to the transmitting device. For example, the BS may receive a specific channel/signal from the LTE, and may determine an optimum power level of the LTE based on the power level, SNR, BER, BLER, etc. measured through the received specific channel/signal. The BS may transfer information (i.e., feedback) on the determined optimum power level to the UE through a control channel or the like, and the corresponding UE may control Tx power using the feedback provided by the BS.

Hereinafter, a power control method for cases in which a UE and/or a mobile device performs uplink transmission on a BS in a wireless communication system will be described.

In detail, hereinafter, power control methods for transmission of 1) a LTL data channel (e.g., PUSCH (Physical Uplink Shared Channel)), 2) an uplink control channel (e.g., PUCCH (Physical Uplink Control Channel)), 3) a Sounding Reference Signal (SRS), and 4) a random access channel (e.g., PRACH (Physical Random Access Channel)) will be described. In this case, a transmission occasion (i.e., a transmission time unit) (i) for a PUSCH, a PUCCH, an SRS, and/or a PRACH may be defined by a slot index ($n\_s$), a first symbol (S) in a slot, the number of consecutive symbols (L), and the like in a frame of a system frame number (SFN).

Hereinafter, for convenience of description, a power control method will be described based on a case in which the LTE performs PUSCH transmission. Needless to say, the corresponding method may be extensively applied to other UL data channels supported in a wireless communication system.

In the case of PUSCH transmission in an activated (active) UL bandwidth part (UL BWP) of a carrier (carrier) (f) of a serving cell (c), the UE may calculate a linear power value of Tx power determined using Equation 2 below. Then, the UE may control the Tx power in consideration of the number of antenna ports and/or the number of SRS ports.

In detail, when performing PUSCH transmission in an activated UL BWP (b) of a carrier (f) of a serving cell (c) using a parameter set configuration based on an index j and a PUSCH power control adjustment state based on an index I, the UE may determine PUSCH Tx power $P_{\text{PUSCH},b,f,c}(i,j,q_d,l)$ (dBm) in the PUSCH transmission occasion (i) based on Equation 2 below.

[Equation 2]

$$P_{\text{PUSCH}b,f,c}(i,j,q_d,l) = \min \begin{cases} P_{\text{CMAX}f,c}(i), \\ P_{\text{O\_PUSCH}b,f,c}(j) + 10\log_{10}(2^{\mu} \cdot M_{\text{RB}b,f,c}^{\text{PUSCH}}(i)) + \alpha_{b,f,c}(j) \cdot PL_{b,f,c}(q_d) + \Delta_{\text{TF}b,f,c}(i) + f_{b,f,c}(i,l) \end{cases}$$

[dBm]

In Equation 2, index j may refer to an index for an open-loop power control parameter (e.g., Po or alpha) and may be configured with the maximum of 32 parameter sets per cell. index q_d may refer to an index of a DL RS resource for PathLoss (PL) measurement and may be configured with the maximum of 4 measurements per cell. index I may refer to an index for a closed-loop power control process and may be configured with the maximum of 2 processes per cell.

In detail, Po may be a parameter broadcast as a part of system information, and may indicate a target reception power at a receiving side. The corresponding Po value may be configured in consideration of UE throughput, cell capacity, noise, and/or interference. In addition, alpha may indicate a rate at which compensation for path loss is performed. Alpha may be set to a value from 0 to 1, and full pathloss compensation or fractional pathloss compensation may be performed according to the set value. In this case, the alpha value may be set in consideration of interference between LTEs and/or data rates. In addition, $P_{CMAX, f,c}(i)$ may represent the configured UE Tx power. For example, the configured UE Tx power may be interpreted as 'configured maximum UE output power' defined in 3GPP TS 38.101-1 and/or TS38.101-2.

In addition, $M_{\text{RB}b,f,c}^{\text{PUSCH}}(i)$ may represent a bandwidth of PUSCH resource allocation expressed by the number of resource blocks (RBs) for a PUSCH transmission occasion based on subcarrier spacing. In addition, $f_{b,f,c}(i,l)$ related to the PUSCH power control adjustment state may be configured or indicated based on a TPC command field of DCI (e.g., DCI format 0_0, DCI format 0_1, DCI format 2_2, or DCI format2_3).

In this case, a specific RRC (Radio Resource Control) parameter (e.g., SRI-PUSCHPowerControl-Mapping) may represent a linkage between an SRI (SRS Resource Indicator) field of DCI (downlink control information) and the above-mentioned indexes j, q_d, and l. In other words, the above-described indexes j, l, and q_d may be related to a beam, a panel, and/or a spatial domain transmission filter based on specific information. Through this, PUSCH Tx power control in units of beams, panels, and/or spatial domain transmission filters may be performed.

Parameters and/or information for the above-described PUSCH power control may be individually (i.e., independently) configured for each BWP. In this case, the corresponding parameters and/or information may be configured or indicated through higher layer signaling (e.g., RRC signaling or Medium Access Control-Control Element (MAC-CE)) and/or DCI. For example, parameters and/or information for PUSCH power control may be transferred through RRC signaling PUSCH-ConfigCommon, PUSCH-PowerControl, and the like.

Multi-TRP (Transmission/Reception Point) related operations

The coordinated multi point (CoMP) technique refers to a method by which multiple BSs exchange channel information (e.g., RI/CQI/PMI/LI, etc.) fed back from a LTE (using, for example, an X2 interface) or utilize the same to perform coordinated transmission to the LTE to effectively control interference. The coordinated transmission may be classified into joint transmission (JT), coordinated scheduling (CS), coordinated beamforming (CB), dynamic point selection (DPS), dynamic point blacking (DPB), and the like according to the method employed.

The M-TRP transmission, in which M TRPs transmit data to one user equipment (UE) may include eMBB M-TRP transmission, which is a method for increasing the transmission rate, and URLLC M-TRP transmission, which is a method for increasing the reception success rate and reducing latency.

In addition, in terms of downlink control information (DCI) transmission, the M-TRP (multiple TRP) transmission may be divided into i) multi-DCI (M-DCI) based M-TRP transmission, in which each TRP transmits different DCI, and ii) single DCI (S-DCI) based M-TRP transmission, in which one TRP transmits DCI. For example, in the case of S-DCI, all scheduling information related to data transmitted by M TRPs should be delivered by single DCI. The S-DCI may be used in an ideal BackHaul (BH) environment where dynamic cooperation may be performed between two TRPs.

For example, regarding TDM-based URLLC, Scheme 4 represents a method in which one TRP transmits a TB in one slot, and the same TB from multiple TRPs is received in multiple slots. Accordingly, this scheme may increase the probability of receiving data. In contrast, Scheme 3 represents a method in which one TRP transmits a TB across several consecutive OFDM symbols (i.e., a symbol group). In this scheme, multiple TRPs may be configured to transmit the same TB using different OFDM symbol groups in one slot.

In addition, the UE may recognize PUSCHs (or PUCCHs) scheduled by the DCI received through different CORESETs (or CORESETs belonging to different CORESET groups) as PUSCHs (or PUCCHs) transmitted to different TRPs or as PUSCHs (or PUCCH) of different TRPs. The method for UL transmission (e.g., PUSCH/PUCCH) transmitted to different TRPs may also be applied to UL transmission (e.g., PUSCH/PUCCH) transmitted to different panels belonging to the same TRP.

Non-coherent joint transmission (NCJT) may be a method in which multiple transmission points (TPs) transmit data to one UE using the same time frequency. Specifically, different demodulation multiplexing reference signal (DMRS) ports may be used between multiple TPs, and the multiple TPs may transmit data in different layers. The TPs may deliver, in downlink control information (DCI), data scheduling information to a UE receiving the NCJT. The method in which each TP participating in NCJT delivers, in DCI, scheduling information related to data transmitted by the TP is referred to as multi DCI based NCJT. Since each of N TPs participating in NCJT transmission transmits DL grant DCI and PDSCH to the UE, the UE may receive N DCIs and N PDSCHs from the N TPs.

In contrast, a method in which one representative TP among the N TPs transmits, through one DCI, scheduling information related to the data transmitted by the representative TP and the data transmitted by the other TPs is referred to as single DCI based NCJT. In this case, the N TPs may transmit one PDSCH, but each of the TPs may transmit only some layers (or data in some layers) among multiple layers constituting one PDSCH. For example, when data is transmitted through four layers, TP 1 may transmit two layers (or data in the two layers), and TP 2 may transmit the remaining two layers (or data in the two layers) to the UE.

Multiple TRPs (MTRP) performing NCJT transmission may transmit DL data to the LTE based on the following two methods.

As a first method, a single DCI based MTRP scheme will be discussed. MTRPs may transmit one common PDSCH in a coordinated manner. Each TRP participating in cooperative transmission spatially divides the PDSCH into different layers (i.e., different DMRS ports) to perform transmission (transmit DL data). In this case, the scheduling information related to the PDSCH may be indicated to the UE through one DCI, and the DCI may indicate information about the QCL RS and QCL type used for a DMRS port (which may be different from indication of the QCL RS and TYPE commonly applied to all DMRS ports indicated in conventional DCI). That is, M TCI states may be indicated through the TCI field in the DCI (where M = 2 in the case of, for example, 2-TRP coordinated transmission), and the QCL RS and type may be identified based on M different TCI states for M DMRS port groups. Also, DMRS port information may be indicated using a new DMRS table. In other words, the DCI may indicate the QCL RS and QCL type corresponding to each port through the TCI field. Alternatively, DMRS port information (e.g., information about the QCL RS and QCL type corresponding to each DMRS port) may be indicated based on a separate DMRS table.

As a second method, a multiple DCI based MTRP scheme will be discussed. The MTRPs transmit different DCIs and PDSCHs, and the PDSCHs to be transmitted may be arranged to partially or fully overlap with each other on frequency time resources. The PDSCHs may be scrambled through different scrambling IDs. The DCIs may be transmitted through CORESETs belonging to different CORESET groups (wherein the CORESET groups may be identified with indexes defined in the CORESET configuration of each CORESET. For example, when CORESETs 1 and 2 have index = 0 and CORESETs 3 and 4 have index = 1, one CORESET group may include CORESETs 1 and 2, and another CORESET group may include CORESETs 3 and 4. Alternatively, when no index is defined in a CORESET, the index may be interpreted as being 0).

When multiple scrambling IDs are configured or two or more CORESET groups are configured in one serving cell, the UE may recognize that data is received through the multiple DCI based MTRP operation (namely, the UE may recognize transmission of PDSCH and/or DCI according to the second scheme).

Alternatively, whether the single DCI based MTRP scheme (or the first scheme) or the multiple DCI based MTRP scheme (or the second scheme) is used may be indicated to the UE through separate signaling. Alternatively, when multiple CRS patterns are indicated to the LTE for the MTRP operation for one serving cell, rate matching of PDSCH for the CRS vary depending on whether the scheme is the single DCI based MTRP scheme or the multiple DCI based MTRP scheme.

The CORESET group ID described/mentioned below may be defined as an index/identification information (e.g., ID) for distinguishing CORESETs for respective TRPs/panels. In addition, the CORESET group may be a group/union of CORESETs identified by an index/identification information (e.g., ID)/the CORESET group ID for distinguishing CORESETs for respective TRPs/panels. Alternatively, the CORESET group ID may be specific index information defined in the CORSET configuration. Alternatively, the CORESET group may be configured/indicated/defined by an index defined in the CORESET configuration for each CORESET. Alternatively, the CORESET group ID may mean an index/identification information/indicator for distinguishing between/identifying CORESETs configured for/associated with the respective TRPs/panels.

Alternatively, the CORESET group ID may be replaced with a specific index/specific identification information/a specific indicator for distinguishing between/identifying CORESETs configured for/associated with the respective TRPs/panels. The CORESET group ID (i.e., a specific index, specific identification information and/or a specific indicator for distinguishing between/identifying CORESETs configured for/associated with the respective TRPs/panels) may be configured/indicated through higher layer signaling (e.g., RRC signaling), L2 signaling (e.g., MAC-CE), L1 signaling (e.g., DCI), or the like. Alternatively, PDCCH detection for each TRP/panel may be configured/indicated in units of the CORESET group. Additionally/alternatively, uplink control information (e.g., CSI, HARQ- A/N, SR) and/or uplink physical channel resources (e.g., PUCCH/PRACH/SRS resources) may be configured (or indicated) so as to be separately managed (or controlled) in units of the CORESET group, or HARQ A/N (process/retransmission) for PDSCH/PUSCH or the like scheduled for each TRP/panel may be managed in units of the CORESET group.

For example, ControlResourceSet IE (information element), which is a higher layer parameter, is used to configure a time/frequency control resource set (CORESET). Here, the CORESET may be related to detection and reception of downlink control information. The ControlResourceSet IE may include a CORESET-related ID (e.g., controlResourceSetID), a CORESET pool index (e.g., CORESETPoolIndex) for the CORESET, a time/frequency resource configuration of the CORESET, and TCI information related to the CORESET. The CORESET pool index (e.g., CORESETPoolIndex) may be set to 0 or 1. Here, the CORESET group may correspond to a CORESET pool, and the CORESET group ID may correspond to the CORESET pool index (e.g., CORESETPoolIndex).

In addition, the NCJT may be divided into a fully overlapped NCJT in which time-frequency resources transmitted by respective TPs completely overlap with each other, and a partially overlapped NCJT in which only some time-frequency resources are overlapped with each other. In the case of partially overlapped NCJT, both data of TP 1 and TP2 are transmitted on some time-frequency resources, and only TP 1 or TP 2 may transmit data on the remaining time-frequency resources.

## Method for improving reliability in multiple TRPs

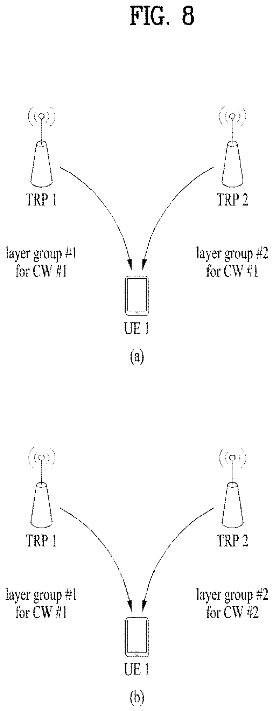

FIG. 8 is a diagram illustrating a method for improving reliability in multiple TRPs.

As transmission/reception methods for improving reliability using transmission in multi-TRP, the following two methods may be considered.

Referring to FIG. 8-(a), layer groups transmitting the same codeword (CW) and/or TB may correspond to different TRPs. Here, the layer group may be a layer set including at least one layer. In this case, the amount of transmission resources may increase due to the number of layers, and robust channel coding with a low code rate may be used for a transport block (TB) due to the increase in the amount of transmission resources. In addition, since the channels from multiple TRPs are different, improvement of reliability of the received signal may be expected based on the diversity gain.

Referring to FIG. 8-(b), different CWs may be transmitted through layer groups corresponding to different TRPs. Here, since the TB corresponding to CW #1 may be the same as the TB corresponding to CW #2, it may be assumed that the same TB is repeatedly transmitted. In this case, the code rate corresponding to the TB is higher that when the method illustrated in FIG. 8-(a) is used. However, the code rate may be adjusted or the modulation order of each CW may be adjusted by indicating different values of redundancy version (RV) for encoding bits generated from the same TB according to the channel environment.

As described above, in the methods according to FIG. 8-(a) and/or FIG. 8-(b), the same TB may be repeatedly transmitted through different layer groups, and each layer group may be transmitted through different TRPs/panels. In this case, the probability of receiving data may increase. Hereinafter, these methods are defined and described as an SDM based M-TRP URLLC transmission method. Layers belonging to different layer groups may be transmitted through DMRS ports belonging to different DMRS CDM groups.

In addition, although the above-mentioned content related to multiple TRPs has been described based on a spatial division multiplexing (SDM) scheme using different layers, the description may be applied even to frequency division multiplexing (FDM), which is based on different frequency domain resources (e.g., RBs/PRBs (or RB/PRB sets)) and/or time division multiplexing (TDM), which is based on different time domain resources (e.g., slots, symbols, sub-symbols).

## Higher Rank UL Codebook Design for DFT-s-OFDM

In the current NR, codebook-based LTL transmission is designed to allow only single-layer transmission in the case of DFT-s-OFDM and maximum rank 4 (RANK 4) transmission in the case of CP-OFDM. DFT-s-OFDM has fewer issues than CP-OFDM in terms of peak-to-average power ratio (PAPR) due to the single carrier property, and is thus widely used for uplink transmission. Even when DFT-s-OFDM is used in NR, transmission using a plurality of layers may be considered in order to increase throughput. To this end, a higher rank codebook needs to be newly designed. Hereinafter, description will be given of a higher rank codebook design and signaling for improving performance of transmission of an uplink signal in transmitting an uplink signal (PUSCH) using DFT-s-OFDM in a wireless communication environment such as NR.

For example, the transform precoder for the PUSCH may be enabled or disabled through the parameter transformprecoder of the higher layer parameter PUSCH-Config IE, and DFT-S-OFDM and/or CP-OFDM may be configured based thereon. For example, a configuration may be established such that DFT-S-OFDM is used when the transform precoder is enabled, and CP-OFDM is used when the transform precoder is disabled.

For simplicity, the LTL codebook currently used for DFT-s-OFDM in NR may be defined as shown in Table 12 (precoding matrix W for single layer transmission using two antenna ports) below.

[Table 12]

| TPMI index | W (ordered from left to right in increasing order of TPMI index) | | | | | | | |
|---|---|---|---|---|---|---|---|---|
| 0-5 | $\frac{1}{\sqrt{2}}\begin{bmatrix}1\\0\end{bmatrix}$ | $\frac{1}{\sqrt{2}}\begin{bmatrix}0\\1\end{bmatrix}$ | $\frac{1}{\sqrt{2}}\begin{bmatrix}1\\1\end{bmatrix}$ | $\frac{1}{\sqrt{2}}\begin{bmatrix}1\\-1\end{bmatrix}$ | $\frac{1}{\sqrt{2}}\begin{bmatrix}1\\j\end{bmatrix}$ | $\frac{1}{\sqrt{2}}\begin{bmatrix}1\\-j\end{bmatrix}$ | - | |

The case of 2Tx will be described. As shown in Table 12, the 2Tx (or 2 port) codebook is composed of 6 states, and 3 bits are indicated as a Transmit Precoding Matrix Indicator (TPMI) field in the DCI. In other words, the six states may be indicated with 3 bits in the TPMI field in the DCI. Here, the remaining two states may be reserved states. In DFT-s-OFDM, it is an important design metric that TPMIs have a cubic metric (CM) preserving property. TPMIs having the CM preserving property may take the form of a codebook matrix in which zero or one non-zero element is present in each column. A representative form is an identity matrix. Therefore, rank 2 may be support by adding a rank 2 codebook having such CM preserving property to the reserved states of the TPMI field.

Specifically, proposals 1 and 2 below may be considered.

(1) Suggestion 1

For transmission of a 2Tx-based rank 2 uplink signal (PUSCH) using DFT-s-OFDM, a TPMI subset (or codebook subset) of Table 13 (an example of 2Tx Rank2 TPMI) may be used. As the TPMI subset applied in this case, the TPMI subset (or codebook subset) of Table 14, 15, or 16 may be considered.

[Table 13]

| TPMI index | W (ordered from left to right in increasing order of TPMI index) | | | |
|---|---|---|---|---|
| 0 | $\frac{1}{\sqrt{2}}\begin{bmatrix}1 & 0\\0 & 1\end{bmatrix}$ | | | |

When Suggestion 1 is used, codebook subsets according to the coherency of the UE may be defined as shown in Table 14 (an example of 2Tx full-coherent TPMI subset) and Table 15 (an example of 2Tx non-coherent TPMI subset).

[Table 14]

| TPMI index | W (ordered from left to right in increasing order of TPMI index) | | | | | | | |
|---|---|---|---|---|---|---|---|---|
| 0-6 | $\frac{1}{\sqrt{2}}\begin{bmatrix}1\\0\end{bmatrix}$ | $\frac{1}{\sqrt{2}}\begin{bmatrix}0\\1\end{bmatrix}$ | $\frac{1}{\sqrt{2}}\begin{bmatrix}1\\1\end{bmatrix}$ | $\frac{1}{\sqrt{2}}\begin{bmatrix}1\\-1\end{bmatrix}$ | $\frac{1}{\sqrt{2}}\begin{bmatrix}1\\j\end{bmatrix}$ | $\frac{1}{\sqrt{2}}\begin{bmatrix}1\\-j\end{bmatrix}$ | $\frac{1}{\sqrt{2}}\begin{bmatrix}1 & 0\\0 & 1\end{bmatrix}$ | - |

[Table 15]

| TPMI index | W (ordered from left to right in increasing order of TPMI index) | | | | | | | |
|---|---|---|---|---|---|---|---|---|
| 0-2 | $\frac{1}{\sqrt{2}}\begin{bmatrix}1\\0\end{bmatrix}$ | $\frac{1}{\sqrt{2}}\begin{bmatrix}0\\1\end{bmatrix}$ | $\frac{1}{\sqrt{2}}\begin{bmatrix}1 & 0\\0 & 1\end{bmatrix}$ | - | - | - | - | - |

When the UE receives a configuration of a full-coherent codebook subset using the above indication scheme, the configuration is indicated through the existing reserved states, and therefore the BS may receive an indication/configuration of a TPMI/TRI by 3 bits in the DCI (without increasing the payload) as in the previous case. In the non-coherent case, the BS may receive an indication/configuration of a TPMI/TRI by 2 bits (payload reduced by 1 bit).

Alternatively, an indication scheme in which a specific state (specific TPMI (e.g., TPMI=1)) is substituted and used may be considered. For example, for a non-coherent LTE, TPMI index 1 may be replaced with a rank 2 TPMI as shown in Table 16 (2Tx non-coherent TPMI subset) below. In this case, compared to the conventional Rel-15/16, which supports only rank 1, rank 2 may be supported without an increase in payload. Depending on the maximum rank set by the BS for the UE, it may be determined whether the TPMI subset of the conventional Rel-15/16 scheme or the proposed TPMI subset (e.g., Table 16) is to be applied.. That is, when the BS indicates the maximum rank as 1, the existing non-coherent TPMI subset (the TPMI composed of 0 and 1 in Table 5) may be used. In contrast, when the BS indicates the maximum rank as 2, use of Table 16 may be preconfigured. In this case, the codebook subset may vary based on the maximum rank value indicated by the BS.

[Table 16]

| TPMI index | W (ordered from left to right in increasing order of TPMI index) | | | | | | | |
|---|---|---|---|---|---|---|---|---|
| 0-1 | $\frac{1}{\sqrt{2}}\begin{bmatrix}1\\0\end{bmatrix}$ | $\frac{1}{\sqrt{2}}\begin{bmatrix}1&0\\0&1\end{bmatrix}$ | - | - | - | - | - | - |

When the UE supports full-power UL transmission (i.e., ul-FullPowerTransmission set to 'fullpowerMode1'), a codebook subset including full-power TPMI (e.g., TPMI=2) may be redefined as the non-coherent subset in rank 1 as shown in Table 17 (2Tx non-coherent TPMI subset with fullpower mode = 1) to perform full-power transmission. Here, full power mode = 1 means that full-power transmission of the UE is enabled by redefining the codebook subset determined by the coherent capability of the UE (i.e., including at least one full power TPMI (TPMI having at least one 0 as an element in a specific row of the vector/matrix constituting the TPMI)).

[Table 17]

| TPMI index | W (ordered from left to right in increasing order of TPMI index) | | | | | | | |
|---|---|---|---|---|---|---|---|---|
| 0-2 | $\frac{1}{\sqrt{2}}\begin{bmatrix}1\\0\end{bmatrix}$ | $\frac{1}{\sqrt{2}}\begin{bmatrix}0\\1\end{bmatrix}$ | $\frac{1}{\sqrt{2}}\begin{bmatrix}1\\1\end{bmatrix}$ | $\frac{1}{\sqrt{2}}\begin{bmatrix}1&0\\0&1\end{bmatrix}$ | - | - | - | - |

Hereinafter, the design of a 4Tx DFT-s-OFDM based codebook will be described. A rank 1 codebook for DFT-s-OFDM in the current NR may be defined as shown in Table 6 (or Table 7) described above.

In Table 6 (or Table 7) described above, TPMIs 0 to 3 may be used as a non-coherent codebook subset, and TPMIs 0 to 11 may be used as a partial-coherent codebook subset, and TPMIs 0 to 27 may be used as a full-coherent codebook subset. Accordingly, DCI payloads for indicating the TPMIs are 2 bits, 4 bits, and 5 bits (non/partial/full-coherent). The LTE may report coherence capability (e.g., full coherent/partial coherent/non-coherent) to the BS through UE capability information. In this case, the BS may configure a codebook subset (e.g., fullyAndPartialAndNonCoherent, partialAndNonCoherent, or noncoherent) corresponding to the UE based on the coherence capability.

(2) Suggestion 2

For transmission of PUSCH, which is a 4Tx-based rank 2 uplink using DFT-s-OFDM, some or all of the TPMIs composed of a combination of Table 18 (example of Rank2 4Tx TPMI subset), Table 19 (example of Rank2 4Tx TPMI subset), and/or Tables 18 and 19 may be used.

[Table 18]

| TPMI index | W (ordered from left to right in increasing order of TPMI index) | | | |
|---|---|---|---|---|
| 0-3 | $\frac{1}{2}\begin{bmatrix}1&0\\0&1\\0&0\\0&0\end{bmatrix}$ | $\frac{1}{2}\begin{bmatrix}1&0\\0&0\\0&1\\0&0\end{bmatrix}$ | $\frac{1}{2}\begin{bmatrix}1&0\\0&0\\0&0\\0&1\end{bmatrix}$ | $\frac{1}{2}\begin{bmatrix}0&0\\1&0\\0&1\\0&0\end{bmatrix}$ |

(continued)

| TPMI index | W (ordered from left to right in increasing order of TPMI index) | | | |
|---|---|---|---|---|
| 4-7 | $\frac{1}{2}\begin{bmatrix} 0 & 0 \\ 1 & 0 \\ 0 & 0 \\ 0 & 1 \end{bmatrix}$ | $\frac{1}{2}\begin{bmatrix} 0 & 0 \\ 0 & 0 \\ 1 & 0 \\ 0 & 1 \end{bmatrix}$ | $\frac{1}{2}\begin{bmatrix} 1 & 0 \\ 0 & 1 \\ 1 & 0 \\ 0 & -j \end{bmatrix}$ | $\frac{1}{2}\begin{bmatrix} 1 & 0 \\ 0 & 1 \\ 1 & 0 \\ 0 & j \end{bmatrix}$ |
| 8-11 | $\frac{1}{2}\begin{bmatrix} 1 & 0 \\ 0 & 1 \\ -j & 0 \\ 0 & 1 \end{bmatrix}$ | $\frac{1}{2}\begin{bmatrix} 1 & 0 \\ 0 & 1 \\ -j & 0 \\ 0 & -1 \end{bmatrix}$ | $\frac{1}{2}\begin{bmatrix} 1 & 0 \\ 0 & 1 \\ -1 & 0 \\ 0 & -j \end{bmatrix}$ | $\frac{1}{2}\begin{bmatrix} 1 & 0 \\ 0 & 1 \\ -1 & 0 \\ 0 & j \end{bmatrix}$ |
| 12-13 | $\frac{1}{2}\begin{bmatrix} 1 & 0 \\ 0 & 1 \\ j & 0 \\ 0 & 1 \end{bmatrix}$ | $\frac{1}{2}\begin{bmatrix} 1 & 0 \\ 0 & 1 \\ j & 0 \\ 0 & -1 \end{bmatrix}$ | | |

In Table 18, the non-coherent TPMI subset may be composed of TPMI indexes 0 to 5 in Table 18, and the partial/full-coherent TPMI subset may be composed of or divided into TPMI indexes 0 to 13. Calculating the payload for the entire rank 2 by combining this table with the TPMI of rank 1 (e.g., the combination of Table 6 and Table 18 described above) yields 4 bits (non-coherent), 5 bits (partial coherent), and 6 bits (full-coherent).

Alternatively, only the non-coherent TPMI subset in Table 18 may be used. That is, the non-coherent TPMI subset may be available to all of the non-coherent UE, the partial-coherent UE, and the full-coherent LTE. In this case, it may be considered that only a TPMI subset (TPMIs 0 to 5) or a part of the TPMI subset (i.e., a part of TPMIs 0 to 5) is used to reduce the payload.

Alternatively, when the TPMI subset of Table 18 are used, the partial-coherent TPMI subset and the full-coherent TPMI subset of the rank 2 codebook may be the same. Since the full-coherent UE may have better capability than the partial coherent UE, more TPMIs may be configured or considered for a full-coherent codebook subset to increase the performance gain. To this end, the TPMI subset of Table 19 (Rank2 4Tx TPMI subset) may be considered. In the case of Table 19, the partial-coherent TPMI subset may be composed of TPMIs 0 to 3, and the full-coherent TPMI subset may be composed of TPMIs 0 to 15.

[Table 19]

| TPMI index | W (ordered from left to right in increasing order of TPMI index) | | | |
|---|---|---|---|---|
| 0-3 | $\frac{1}{2}\begin{bmatrix} 1 & 0 \\ 0 & 1 \\ 1 & 0 \\ 0 & 1 \end{bmatrix}$ | $\frac{1}{2}\begin{bmatrix} 1 & 0 \\ 0 & 1 \\ 1 & 0 \\ 0 & -1 \end{bmatrix}$ | $\frac{1}{2}\begin{bmatrix} 1 & 0 \\ 0 & 1 \\ -1 & 0 \\ 0 & 1 \end{bmatrix}$ | $\frac{1}{2}\begin{bmatrix} 1 & 0 \\ 0 & 1 \\ -1 & 0 \\ 0 & -1 \end{bmatrix}$ |
| 4-7 | $\frac{1}{2}\begin{bmatrix} 1 & 0 \\ 1 & 0 \\ 0 & 1 \\ 0 & -j \end{bmatrix}$ | $\frac{1}{2}\begin{bmatrix} 1 & 0 \\ 1 & 0 \\ 0 & 1 \\ 0 & j \end{bmatrix}$ | $\frac{1}{2}\begin{bmatrix} 1 & 0 \\ -j & 0 \\ 0 & 1 \\ 0 & 1 \end{bmatrix}$ | $\frac{1}{2}\begin{bmatrix} 1 & 0 \\ -j & 0 \\ 0 & 1 \\ 0 & -1 \end{bmatrix}$ |
| 8-11 | $\frac{1}{2}\begin{bmatrix} 1 & 0 \\ -1 & 0 \\ 0 & 1 \\ 0 & -j \end{bmatrix}$ | $\frac{1}{2}\begin{bmatrix} 1 & 0 \\ -1 & 0 \\ 0 & 1 \\ 0 & j \end{bmatrix}$ | $\frac{1}{2}\begin{bmatrix} 1 & 0 \\ j & 0 \\ 0 & 1 \\ 0 & 1 \end{bmatrix}$ | $\frac{1}{2}\begin{bmatrix} 1 & 0 \\ j & 0 \\ 0 & 1 \\ 0 & -1 \end{bmatrix}$ |

(continued)

| TPMI index | $W$ (ordered from left to right in increasing order of TPMI index) | | | |
|---|---|---|---|---|
| 12 - 15 | $\frac{1}{2}\begin{bmatrix} 1 & 0 \\ 0 & 1 \\ 0 & 1 \\ 1 & 0 \end{bmatrix}$ | $\frac{1}{2}\begin{bmatrix} 1 & 0 \\ 0 & 1 \\ 0 & -1 \\ 1 & 0 \end{bmatrix}$ | $\frac{1}{2}\begin{bmatrix} 1 & 0 \\ 0 & 1 \\ 0 & 1 \\ -1 & 0 \end{bmatrix}$ | $\frac{1}{2}\begin{bmatrix} 1 & 0 \\ 0 & 1 \\ 0 & -1 \\ -1 & 0 \end{bmatrix}$ |

As a combination of Table 18 and Table 19, the rank 2 codebooks of Table 20 (example of Rank2 4Tx TPMI subset) and Table 21 (example of Rank2 4Tx TPMI subset) may be considered.

[Table 20]

| TPMI index | $W$ (ordered from left to right in increasing order of TPMI index) | | | |
|---|---|---|---|---|
| 0-3 | $\frac{1}{2}\begin{bmatrix} 1 & 0 \\ 0 & 1 \\ 0 & 0 \\ 0 & 0 \end{bmatrix}$ | $\frac{1}{2}\begin{bmatrix} 1 & 0 \\ 0 & 0 \\ 0 & 1 \\ 0 & 0 \end{bmatrix}$ | $\frac{1}{2}\begin{bmatrix} 1 & 0 \\ 0 & 0 \\ 0 & 0 \\ 0 & 1 \end{bmatrix}$ | $\frac{1}{2}\begin{bmatrix} 0 & 0 \\ 1 & 0 \\ 0 & 1 \\ 0 & 0 \end{bmatrix}$ |
| 4-7 | $\frac{1}{2}\begin{bmatrix} 0 & 0 \\ 1 & 0 \\ 0 & 0 \\ 0 & 1 \end{bmatrix}$ | $\frac{1}{2}\begin{bmatrix} 0 & 0 \\ 0 & 0 \\ 1 & 0 \\ 0 & 1 \end{bmatrix}$ | $\frac{1}{2}\begin{bmatrix} 1 & 0 \\ 0 & 1 \\ 1 & 0 \\ 0 & -j \end{bmatrix}$ | $\frac{1}{2}\begin{bmatrix} 1 & 0 \\ 0 & 1 \\ 1 & 0 \\ 0 & j \end{bmatrix}$ |
| 8-11 | $\frac{1}{2}\begin{bmatrix} 1 & 0 \\ 0 & 1 \\ -j & 0 \\ 0 & 1 \end{bmatrix}$ | $\frac{1}{2}\begin{bmatrix} 1 & 0 \\ 0 & 1 \\ -j & 0 \\ 0 & -1 \end{bmatrix}$ | $\frac{1}{2}\begin{bmatrix} 1 & 0 \\ 0 & 1 \\ -1 & 0 \\ 0 & -j \end{bmatrix}$ | $\frac{1}{2}\begin{bmatrix} 1 & 0 \\ 0 & 1 \\ -1 & 0 \\ 0 & j \end{bmatrix}$ |
| 12 - 15 | $\frac{1}{2}\begin{bmatrix} 1 & 0 \\ 0 & 1 \\ j & 0 \\ 0 & 1 \end{bmatrix}$ | $\frac{1}{2}\begin{bmatrix} 1 & 0 \\ 0 & 1 \\ j & 0 \\ 0 & -1 \end{bmatrix}$ | $\frac{1}{2}\begin{bmatrix} 1 & 0 \\ 0 & 1 \\ 0 & 1 \\ -1 & 0 \end{bmatrix}$ | $\frac{1}{2}\begin{bmatrix} 1 & 0 \\ 0 & 1 \\ 0 & -1 \\ -1 & 0 \end{bmatrix}$ |
| 16 - 19 | $\frac{1}{2}\begin{bmatrix} 1 & 0 \\ 1 & 0 \\ 0 & 1 \\ 0 & -j \end{bmatrix}$ | $\frac{1}{2}\begin{bmatrix} 1 & 0 \\ 1 & 0 \\ 0 & 1 \\ 0 & j \end{bmatrix}$ | $\frac{1}{2}\begin{bmatrix} 1 & 0 \\ -j & 0 \\ 0 & 1 \\ 0 & 1 \end{bmatrix}$ | $\frac{1}{2}\begin{bmatrix} 1 & 0 \\ -j & 0 \\ 0 & 1 \\ 0 & -1 \end{bmatrix}$ |
| 20 - 23 | $\frac{1}{2}\begin{bmatrix} 1 & 0 \\ -1 & 0 \\ 0 & 1 \\ 0 & -j \end{bmatrix}$ | $\frac{1}{2}\begin{bmatrix} 1 & 0 \\ -1 & 0 \\ 0 & 1 \\ 0 & j \end{bmatrix}$ | $\frac{1}{2}\begin{bmatrix} 1 & 0 \\ j & 0 \\ 0 & 1 \\ 0 & 1 \end{bmatrix}$ | $\frac{1}{2}\begin{bmatrix} 1 & 0 \\ j & 0 \\ 0 & 1 \\ 0 & -1 \end{bmatrix}$ |
| 24-25 | $\frac{1}{2}\begin{bmatrix} 1 & 0 \\ 0 & 1 \\ 0 & 1 \\ 1 & 0 \end{bmatrix}$ | $\frac{1}{2}\begin{bmatrix} 1 & 0 \\ 0 & 1 \\ 0 & -1 \\ 1 & 0 \end{bmatrix}$ | | |

In Table 20, the non-coherent TPMI subset may be composed of TPMIs 0 to 5, the partial-coherent TPMI subset may be composed of TPMIs 0 to 13, and the full-coherent TPMI subset may be composed of or divided into TPMIs 0 to 25. When such a TPMI subset and the rank 1 TPMI are combined to construct a codebook of rank 2, the payload related to the codebook of rank 2 is 4 bits (non-coherent), 5 bits (partial-coherent), or 6 bits (full-coherent).

[Table 21]

| TPMI index | $W$ (ordered from left to right in increasing order of TPMI index) | | | |
|---|---|---|---|---|
| 0-3 | $\frac{1}{2}\begin{bmatrix} 1 & 0 \\ 0 & 1 \\ 0 & 0 \\ 0 & 0 \end{bmatrix}$ | $\frac{1}{2}\begin{bmatrix} 1 & 0 \\ 0 & 0 \\ 0 & 1 \\ 0 & 0 \end{bmatrix}$ | $\frac{1}{2}\begin{bmatrix} 1 & 0 \\ 0 & 0 \\ 0 & 0 \\ 0 & 1 \end{bmatrix}$ | $\frac{1}{2}\begin{bmatrix} 0 & 0 \\ 1 & 0 \\ 0 & 1 \\ 0 & 0 \end{bmatrix}$ |
| 4-7 | $\frac{1}{2}\begin{bmatrix} 0 & 0 \\ 1 & 0 \\ 0 & 0 \\ 0 & 1 \end{bmatrix}$ | $\frac{1}{2}\begin{bmatrix} 0 & 0 \\ 0 & 0 \\ 1 & 0 \\ 0 & 1 \end{bmatrix}$ | $\frac{1}{2}\begin{bmatrix} 1 & 0 \\ 0 & 1 \\ 1 & 0 \\ 0 & 1 \end{bmatrix}$ | $\frac{1}{2}\begin{bmatrix} 1 & 0 \\ 0 & 1 \\ 1 & 0 \\ 0 & -1 \end{bmatrix}$ |
| 8-11 | $\frac{1}{2}\begin{bmatrix} 1 & 0 \\ 0 & 1 \\ -1 & 0 \\ 0 & 1 \end{bmatrix}$ | $\frac{1}{2}\begin{bmatrix} 1 & 0 \\ 0 & 1 \\ -1 & 0 \\ 0 & -1 \end{bmatrix}$ | $\frac{1}{2}\begin{bmatrix} 1 & 0 \\ 1 & 0 \\ 0 & 1 \\ 0 & -j \end{bmatrix}$ | $\frac{1}{2}\begin{bmatrix} 1 & 0 \\ 1 & 0 \\ 0 & 1 \\ 0 & j \end{bmatrix}$ |
| 12 - 15 | $\frac{1}{2}\begin{bmatrix} 1 & 0 \\ -j & 0 \\ 0 & 1 \\ 0 & 1 \end{bmatrix}$ | $\frac{1}{2}\begin{bmatrix} 1 & 0 \\ -j & 0 \\ 0 & 1 \\ 0 & -1 \end{bmatrix}$ | $\frac{1}{2}\begin{bmatrix} 1 & 0 \\ -1 & 0 \\ 0 & 1 \\ 0 & -j \end{bmatrix}$ | $\frac{1}{2}\begin{bmatrix} 1 & 0 \\ -1 & 0 \\ 0 & 1 \\ 0 & j \end{bmatrix}$ |
| 16 - 19 | $\frac{1}{2}\begin{bmatrix} 1 & 0 \\ j & 0 \\ 0 & 1 \\ 0 & 1 \end{bmatrix}$ | $\frac{1}{2}\begin{bmatrix} 1 & 0 \\ j & 0 \\ 0 & 1 \\ 0 & -1 \end{bmatrix}$ | $\frac{1}{2}\begin{bmatrix} 1 & 0 \\ 0 & 1 \\ 0 & 1 \\ 1 & 0 \end{bmatrix}$ | $\frac{1}{2}\begin{bmatrix} 1 & 0 \\ 0 & 1 \\ 0 & -1 \\ 1 & 0 \end{bmatrix}$ |
| 20-21 | $\frac{1}{2}\begin{bmatrix} 1 & 0 \\ 0 & 1 \\ 0 & 1 \\ -1 & 0 \end{bmatrix}$ | $\frac{1}{2}\begin{bmatrix} 1 & 0 \\ 0 & 1 \\ 0 & -1 \\ -1 & 0 \end{bmatrix}$ | | |

In Table 21, the non-coherent TPMI subset may be composed of TPMIs 0 to 5, the partial-coherent TPMI subset may be composed of TPMIs 0 to 9, and the full-coherent TPMI subset may be composed of or divided into TPMIs 0 to 21. When such a TPMI subset and the rank 1 TPMI are combined to construct a codebook of rank 2, the payload related to the codebook of rank 2 is 4 bits (non-coherent), 5 bits (partial-coherent), or 6 bits (full-coherent).

1) Suggestion 2-1

Suggestion 2-1 is a proposal for reducing the payload of the DCI indicating the TPMI/TRI in Suggestion 2. In Suggestion 2-1, a part of rank 1 TPMIs and/or the reserved state may be used to indicate rank 2 TPMI in 4Tx DFT-s-OFDM-based UL codebook-based PUSCH transmission.

With regard to Suggestion 2-1, only one of a first TPMI group (rank 1 TPMI 12 to 19) and a second TPMI group (rank 1 TPMI 20-27) may be used based on Table 6 (or Table 7) described about and states corresponding to the remaining TPMI groups may be used to indicate the rank 2 TPMI. Here, the first TPMI group and the second TPMI group are distinguished from each other because the TPMI coefficients corresponding to ports 1 and 3 constituting the TPMI are obtained by performing phase rotation on the TPMI coefficients corresponding to ports 2 and 4 by -1, and the partial-coherent TPMIs of NR are designed on an implicit assumption that ports 1 and 3 are in a coherent relationship and ports 2 and 4 are in a coherent relationship. That is, the first TPMI group and the second TPMI group may be TPMI groups in which a phase rotation relationship is established between port groups having coherency with each other. Here, the first TPMI group may have the same coefficient as the second TPMI group, but the matrix elements corresponding to ports 2 and 4 (that is, rows 2 and 4) may be obtained by performing phase rotation by -1. In this case, the TPMI subset for the rank 1 may include only one of the first TPMI group and the second TPMI group, and accordingly the payload of the DCI may be reduced.

For example, the port 1 or the first antenna port may correspond to the PUSCH port 1000, and the port 3 or the third antenna port may correspond to the PUSCH port 1002. The port 2 or the second antenna port may correspond to the PUSCH port 1001, and the port 4 or the fourth antenna port may correspond to the PUSCH port 1003. Here, the port 1 is related to the first row in a precoding matrix having four rows, and the port 2 is related to the second row in the precoding matrix having four rows. The port 3 is related to the third row in the precoding matrix having four rows, and the port 4 is related to the fourth row in the precoding matrix having four rows.

In this case, the codebook subset may vary according to the maximum rank value indicated by the BS. For example, when the maximum rank is indicated as 1, the existing rank 1 TPMIs 0 to 27 may be used. When the maximum rank is indicated as 2, one of the first TPMI group and the second TPMI group may be used as a rank 1 TPMI subset and the other group may be used as a rank 2 TPMI subset as in Suggestion 2-1. A TPMI subset configured as in Suggestion 2-1 may be used.

Regarding Suggestion 2-1, Table 22 may be an example in which a rank 1 TPMI subset is configured for the first TPMI group and a rank 2 TPMI subset is configured for the second TPMI group, and Table 23 may be an example in which a rank 2 TPMI subset is configured using the reserved state.

[Table 22]

| TP MI ind ex | W (ordered from left to right in increasing order of TPMI index) | | | | | | | |
|---|---|---|---|---|---|---|---|---|
| 0-7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| 8 - 15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\-1\end{bmatrix}$ | $\frac{1}{2}\begin{bmatrix}1\\1\\j\\j\end{bmatrix}$ | $\frac{1}{2}\begin{bmatrix}1\\1\\-1\\1\end{bmatrix}$ | $\frac{1}{2}\begin{bmatrix}1\\1\\-j\\-j\end{bmatrix}$ |
| 16-23 | $\frac{1}{2}\begin{bmatrix}1\\j\\1\\j\end{bmatrix}$ | $\frac{1}{2}\begin{bmatrix}1\\j\\j\\1\end{bmatrix}$ | $\frac{1}{2}\begin{bmatrix}1\\j\\-1\\-j\end{bmatrix}$ | $\frac{1}{2}\begin{bmatrix}1\\j\\-j\\-1\end{bmatrix}$ | $\frac{1}{2}\begin{bmatrix}1&0\\0&1\\0&0\\0&0\end{bmatrix}$ | $\frac{1}{2}\begin{bmatrix}1&0\\0&0\\0&1\\0&0\end{bmatrix}$ | $\frac{1}{2}\begin{bmatrix}1&0\\0&0\\0&0\\0&1\end{bmatrix}$ | $\frac{1}{2}\begin{bmatrix}0&0\\1&0\\0&1\\0&0\end{bmatrix}$ |
| 24-31 | $\frac{1}{2}\begin{bmatrix}0&0\\1&0\\0&0\\0&1\end{bmatrix}$ | $\frac{1}{2}\begin{bmatrix}0&0\\0&0\\1&0\\0&1\end{bmatrix}$ | $\frac{1}{2}\begin{bmatrix}1&0\\0&1\\1&0\\0&-j\end{bmatrix}$ | $\frac{1}{2}\begin{bmatrix}1&0\\0&1\\1&0\\0&j\end{bmatrix}$ | $\frac{1}{2}\begin{bmatrix}1&0\\0&1\\-j&0\\0&1\end{bmatrix}$ | $\frac{1}{2}\begin{bmatrix}1&0\\0&1\\-j&0\\0&-1\end{bmatrix}$ | $\frac{1}{2}\begin{bmatrix}1&0\\0&1\\0&1\\1&0\end{bmatrix}$ | $\frac{1}{2}\begin{bmatrix}1&0\\0&1\\0&-1\\1&0\end{bmatrix}$ |

[Table 23]

| TPM I index | $W$ (ordered from left to right in increasing order of TPMI index) | | | | | | | |
|---|---|---|---|---|---|---|---|---|
| 0-7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| 8 - 15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\-1\end{bmatrix}$ | $\frac{1}{2}\begin{bmatrix}1\\1\\j\\j\end{bmatrix}$ | $\frac{1}{2}\begin{bmatrix}1\\1\\-1\\1\end{bmatrix}$ | $\frac{1}{2}\begin{bmatrix}1\\1\\-j\\-j\end{bmatrix}$ |
| 16-23 | $\frac{1}{2}\begin{bmatrix}1\\j\\1\\j\end{bmatrix}$ | $\frac{1}{2}\begin{bmatrix}1\\j\\j\\1\end{bmatrix}$ | $\frac{1}{2}\begin{bmatrix}1\\j\\-1\\-j\end{bmatrix}$ | $\frac{1}{2}\begin{bmatrix}1\\j\\-j\\-1\end{bmatrix}$ | $\frac{1}{2}\begin{bmatrix}1\\-1\\1\\1\end{bmatrix}$ | $\frac{1}{2}\begin{bmatrix}1\\-1\\j\\-j\end{bmatrix}$ | $\frac{1}{2}\begin{bmatrix}1\\-1\\-1\\-1\end{bmatrix}$ | $\frac{1}{2}\begin{bmatrix}1\\-1\\-j\\j\end{bmatrix}$ |
| 24-31 | $\frac{1}{2}\begin{bmatrix}1\\-j\\1\\-j\end{bmatrix}$ | $\frac{1}{2}\begin{bmatrix}1\\-j\\j\\-1\end{bmatrix}$ | $\frac{1}{2}\begin{bmatrix}1\\-j\\-1\\j\end{bmatrix}$ | $\frac{1}{2}\begin{bmatrix}1\\-j\\-j\\1\end{bmatrix}$ | $\frac{1}{2}\begin{bmatrix}1&0\\0&1\\0&0\\0&0\end{bmatrix}$ | $\frac{1}{2}\begin{bmatrix}1&0\\0&0\\0&1\\0&0\end{bmatrix}$ | $\frac{1}{2}\begin{bmatrix}1&0\\0&0\\0&0\\0&1\end{bmatrix}$ | $\frac{1}{2}\begin{bmatrix}0&0\\1&0\\0&1\\0&0\end{bmatrix}$ |

In this case, the payload of the TPMI field indicating the codebooks for rank 1 and rank 2 may be maintained within 5 bits.

When the UE supports full-power UL transmission (i.e., ul-FullPowerTransmission set to 'fullpowerMode1'), a codebook subset including full-power TPMI (e.g., TPMI = 6) in rank 2 may be redefined as the non-coherent codebook subset to perform full-power transmission, as in the embodiment of Table 24 (example of Rank2 4Tx TPMI Like the non-coherent codebook subset with fullpower mode = 1) below.

[Table 24]

| TPMI index | W (ordered from left to right in increasing order of TPMI index) | | | |
|---|---|---|---|---|
| 0-3 | $\frac{1}{2}\begin{bmatrix}1&0\\0&1\\0&0\\0&0\end{bmatrix}$ | $\frac{1}{2}\begin{bmatrix}1&0\\0&0\\0&1\\0&0\end{bmatrix}$ | $\frac{1}{2}\begin{bmatrix}1&0\\0&0\\0&0\\0&1\end{bmatrix}$ | $\frac{1}{2}\begin{bmatrix}0&0\\1&0\\0&1\\0&0\end{bmatrix}$ |
| 4-7 | $\frac{1}{2}\begin{bmatrix}0&0\\1&0\\0&0\\0&1\end{bmatrix}$ | $\frac{1}{2}\begin{bmatrix}0&0\\0&0\\1&0\\0&1\end{bmatrix}$ | $\frac{1}{2}\begin{bmatrix}1&0\\0&1\\1&0\\0&-j\end{bmatrix}$ | - |

(3) Suggestion 3

Suggestion 3 relates to a method for transmitting PUSCH, which is an uplink, for 4Tx-based rank 3 or 4Tx-based rank 4 based on DFT-s-OFDM. Suggestion 3 may use some or all of TPMIs of Table 25 (example of Rank3 4Tx TPMI subset) and Table 26 (example of Rank 4 4Tx TPMI subset) shown below.

[Table 25]

| Codebook index | Number of layers $\upsilon$ = 3 | | | |
|---|---|---|---|---|
| 0-3 | $\frac{1}{2}\begin{bmatrix}1&0&0\\1&0&0\\0&1&0\\0&0&1\end{bmatrix}$ | $\frac{1}{2}\begin{bmatrix}1&0&0\\-1&0&0\\0&1&0\\0&0&1\end{bmatrix}$ | $\frac{1}{2}\begin{bmatrix}1&0&0\\0&1&0\\1&0&0\\0&0&1\end{bmatrix}$ | $\frac{1}{2}\begin{bmatrix}1&0&0\\0&1&0\\-1&0&0\\0&0&1\end{bmatrix}$ |
| 4-7 | $\frac{1}{2}\begin{bmatrix}1&0&0\\0&1&0\\0&0&1\\1&0&0\end{bmatrix}$ | $\frac{1}{2}\begin{bmatrix}1&0&0\\0&1&0\\0&0&1\\-1&0&0\end{bmatrix}$ | $\frac{1}{2}\begin{bmatrix}0&1&0\\1&0&0\\1&0&0\\0&0&1\end{bmatrix}$ | $\frac{1}{2}\begin{bmatrix}0&1&0\\1&0&0\\-1&0&0\\0&0&1\end{bmatrix}$ |
| 8-11 | $\frac{1}{2}\begin{bmatrix}0&1&0\\1&0&0\\0&0&1\\1&0&0\end{bmatrix}$ | $\frac{1}{2}\begin{bmatrix}0&1&0\\1&0&0\\0&0&1\\-1&0&0\end{bmatrix}$ | $\frac{1}{2}\begin{bmatrix}0&1&0\\0&0&1\\1&0&0\\1&0&0\end{bmatrix}$ | $\frac{1}{2}\begin{bmatrix}0&1&0\\0&0&1\\1&0&0\\-1&0&0\end{bmatrix}$ |
| 12 | $\frac{1}{2}\begin{bmatrix}1&0&0\\0&1&0\\0&0&1\\0&0&0\end{bmatrix}$ | | | |

In Table 25, the non-coherent TPMI subset may be composed of TPMI 12, the partial-coherent TPMI subset may be composed of TPMIs 2, 3, 8, 9, and 12, and the full-coherent TPMI subset may be composed of or divided into TPMIs 0 to 12. As shown in Table 25, in the case of a high rank codebook such as rank 3 transmission, the diversity gain according to selection diversity may be relatively small. In this regard, a TPMI subset may be configured using only some TPMIs in Table 25. For example, the TPMI subset may be composed of TPMIs 0 to 3 and 12 in Table 25.

[Table 26]

| Codebook index | Number of layers $\upsilon = 4$ |
|---|---|
| 0 | $\dfrac{1}{2}\begin{bmatrix} 1 & 0 & 0 & 0 \\ 0 & 1 & 0 & 0 \\ 0 & 0 & 1 & 0 \\ 0 & 0 & 0 & 1 \end{bmatrix}$ |

In the case of a rank 4 codebook, the CM preserving matrix may be in the form of an identity matrix and the row/column permutation thereof. In this case, since there is no gain according to permutation, using one TPMI as shown in Table 26 may be sufficient in terms of performance.

When the LTE supports full-power LTL Tx (i.e., ul-FullPowerTransmission set to 'fullpowerMode1'), a codebook subset including the full-power TPMI (e.g., TPMI = 0 in Table 25) in rank 3 may be redefined as the non-coherent codebook subset as in the embodiment of Table 27 (example of Rank3 4Tx Like the TPMI non-coherent codebook subset with fullpower mode = 1) below to perform full-power transmission.

[Table 27]

| TPMI index | $W$ (ordered from left to right in increasing order of TPMI index) | | | |
|---|---|---|---|---|
| 0-1 | $\dfrac{1}{2}\begin{bmatrix} 1 & 0 & 0 \\ 0 & 1 & 0 \\ 0 & 0 & 1 \\ 0 & 0 & 0 \end{bmatrix}$ | $\dfrac{1}{2}\begin{bmatrix} 1 & 0 & 0 \\ 1 & 0 & 0 \\ 0 & 1 & 0 \\ 0 & 0 & 1 \end{bmatrix}$ | | |

In the above-described proposed methods (e.g., Suggestion 1, Suggestion 2, Suggestion 2-1, Suggestion 3), LTL transmission may be performed using a plurality of layers even when DFT-s-OFDM is used. Thereby, throughput may be greatly increased. In this regard, in codebook design, a codebook subset may be designed in consideration of DCI payload.

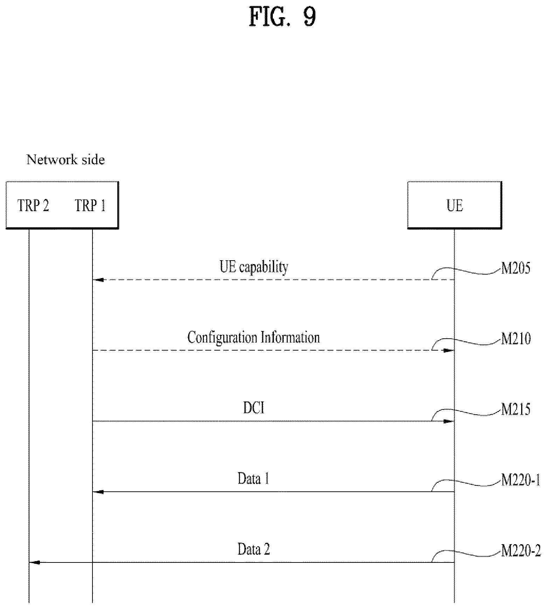

FIG. 9 is a diagram illustrating signaling between a UE and a network side based on multiple TRPs.

The UE and the network side may perform signaling in a situation of multiple TRPs (i.e., M-TRP, multiple cells) (hereinafter, all TRPs may be replaced with cells). Referring to FIG. 9, signaling of a signal between the network side and a LTE is disclosed on the premise of single DCI-based M-TRP transmission. However, the above-described proposed methods may be applied even to multi-DCI-based M-TRP transmission. In addition, while FIG. 9 illustrates signaling between two TRPs and a UE for simplicity, the signaling may be extended and applied even to signaling between a plurality of TRPs and a plurality of LTEs. That is, FIG. 9 is merely an example presented for simplicity of description and is not intended to limit the scope of the present disclosure. In addition, the operation between the network side and the UE related to FIG. 9 may be applied to the uplink transmission/reception operation described with reference to FIG. 5 or to the transmission/reception operation of signals related to multiple TRPs described with reference to FIG. 8.

Hereinafter, the network side may be one BS including a plurality of TRPs or one cell including a plurality of TRPs. For example, ideal/non-ideal backhaul may be configured between TRP 1 and TRP 2 constituting the network side. In addition, the following description is based on a plurality of TRPs, but may be equally extended and applied to signaling through a plurality of panels. Furthermore, an operation of the UE receiving signals from TRP1 and/or TRP2 may be interpreted/described as (or may be) an operation of the LTE receiving signals from the network side (i.e., through/using TRP1/TRP2). An operation of the UE transmitting a signal to TRP1/TRP2 may be interpreted/described as (or may be) an operation of the UE transmitting a signal to the network side (through/using TRP1/TRP2), or vice versa.

A BS may be a generic term referring to objects that transmit and receive data to and from a UE. For example, the BS may be a concept including one or more transmission points (TPs) or one or more transmission and reception points (TRPs). Also, the TP and/or the TRP may include a panel of the BS or a transmission and reception unit. Hereinafter, the description will be made based on "TRP." However, as described above, "TRP" may be replaced with a term such as panel, antenna array, cell (e.g., macro cell/small cell/pico cell, etc.), TP, base station (BS) (gNB, etc.). Also, as described above, TRPs may be classified according to information (e.g., index, ID) related to the CORESET group (or CORESET pool). For example, configuring one LTE to perform transmission and reception to and from multiple TRPs (or cells) may mean that multiple CORESET groups (or CORESET pools) are configured for one UE. Such configuration of CORESET groups (or CORESET pools) may be performed through higher layer signaling (e.g., RRC signaling, etc.).

Specifically, FIG. 9 illustrates signaling performed when the UE receives a single DCI (namely, one TRP transmits DCI to the LTE) in a situation in which M-TRPs (or cells) (hereinafter, all TRPs may be replaced with cells/panels, or a plurality of CORESETs (CORESET groups) configured from one TRP may also be assumed to be M-TRPs) are configured. In FIG. 9, it is assumed that TRP 1 is a representative TRP transmitting the DCI.

Referring to FIG. 9, the UE may transmit a UE capability to the network side through/using TRP 1 (and/or TRP 2) (M205). For example, the UE capability may include information about whether the UE supports the above-described proposed methods (e.g., Suggestion 1/Suggestion 2/Suggestion 3, etc.) and information about capability of the UE related to supported operations.

For example, the UE capability may include the number (#N) of supported antenna ports, the number of ports per panel, the number of panels capable of simultaneous transmission, coherency capability (e.g., nonCoherent, partialNonCoherent, fullCoherent), full power transmission capability, supported full Tx mode, supported TPMI group, port switching capability, TX chain related information, and information about whether M-TRP transmission is supported.

Operation M205 may be skipped when the LTE capability information is predefined/preconfigured.

The LTE may receive configuration information related to M-TRP transmission/reception from the network side through/using TRP 1 (and/or TRP 2) (M210). For example, the configuration information may include information related to network-side configuration (i.e., M-TRP configuration), resource information (resource allocation) related to multiple TRP-based transmission and reception, system information (SI), scheduling information, PUSCH-Config (see TS 38.331 PUSCH Config, 4.1.4 Uplink transmission/reception operation), and CORESET-related configuration. In this case, the configuration information may be delivered through higher layer signaling (e.g., RRC signaling, MAC-CE, etc.). Also, operation M210 may be skipped when the configuration information is predefined or preconfigured.

In addition, the configuration information may include information necessary for the operation described in the above-described proposed methods (Suggestion 1/Suggestion 2/Suggestion 3, etc.). For example, the configuration information may include information related to a subset of PMIs (e.g., codebook subset: information indicating one of fullyAndPartialAndNonCoherent, partialAndNonCoherent, and noncoherent according to UE coherence capability), maximum rank information (e.g., maxRank), transform precoder information, and information (e.g., txConfig) about whether the transmission is codebook-based UL transmission. Here, the transform precoder information may be set to either enable or disable, and DFT-S-OFDM or CP-OFDM may be configured based thereon. For example, when the transform precoder is indicated as 'enable', the UE may transmit an uplink signal using DFT-S-OFDM. When the transform precoder is indicated as 'disable', the UE may transmit an uplink signal using CP-OFDM.

The LTE may receive DCI from the network side through/using TRP 1 (M215). The DCI may be transmitted on a control channel (e.g., PDCCH, etc.). For example, the DCI may include information for scheduling UL transmission (e.g., UL scheduling information) and precoding related information. Here, the precoding related information may include information on SRI, TPMI, TRI, MCS, and the like. For example, the DCI may be DCI format 0-1 or DCI format 0-0 (see the LTL transmission/reception operation in FIG. 6). Alternatively, PUSCH scheduling for multiple cells may be performed at once through the DCI.

For example, as described in the proposed methods (e.g., Suggestion 1/proposal 2/proposal 3, etc.) in consideration of the case of transmission and reception through a plurality of panels/ports, a TRI/TPMI/SRI may be configured. For example, it may be assumed that a TRI for one of a plurality of TRPs (e.g., the first TRP (e.g., which may be determined based on an index such as CoresetID/TCI state)) is indicated and the same TRP value is applied for the other TRPs. Alternatively, a TRI to be applied commonly/individually for each TRP may be indicated through higher layer configuration, and a TPMI may be indicated through DCI. Alternatively, the field size of the TPMI may be determined based on the greatest value among the numbers of TPMIs for the respective ranks. For example, the TPMI index of the codebook subset of at least one of Tables 13 to 27 in the above-described proposed methods (e.g., Suggestion 1/Suggestion 2/Suggestion 3, etc.) may be indicated based on the TPMI field of the DCI.

The LTE may transmit data 1 to the network side through (or using) TRP 1 (M220-1). In addition, the LTE may transmit data 2 to the network side through (or using) TRP 2 (M220-2). The data (e.g., data 1 and/or data 2) may be transmitted on an uplink channel (e.g., PUCCH/PUSCH, etc.). Also, operations M220-1 and M220-2 may be performed simultaneously, or one of the operations may be performed earlier than the other one. For example, data 1 and/or data 2 may be subjected to precoding and may include an RS (e.g., DMRS) for data decoding.

For example, transmission of data 1 and/or data 2 may be performed based on the above-described proposed methods (e.g., Suggestion 1/proposition 2/proposal 3, etc.). Alternatively, data 1 and/or data 2 may be transmitted through a plurality of layers using DFT-s-OFDM based on the configuration information and/or the DCI. Alternatively, transmission of data 1 and/or data 2 may be codebook-based UL transmission. Alternatively, data 1 and/or data 2 may be transmitted based on the codebook subset of at least one of Tables 13 to 27 described above. Alternatively, the codebook subset applied to data 1 and/or data 2 may vary according to the max rank value indicated by the BS.

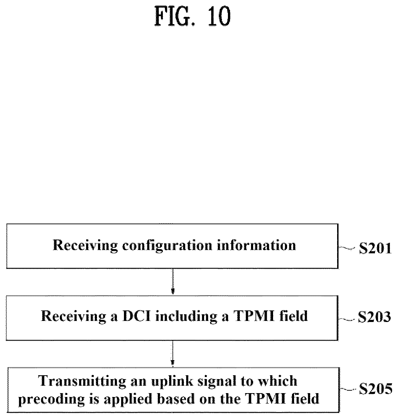

FIG. 10 is a diagram illustrating a method for transmitting an uplink signal by a UE based on a codebook.

Hereinafter, it is assumed that the UE transmits the uplink signal using 4Tx ports, and that a codebook and TPMI in the following description includes or indicates precoding matrices for 4Tx ports. The above assumption is for simplicity of description, and the above-described suggestions or the following methods may be applied to a case where the LTL signal is transmitted using a plurality of TX ports.

Referring to FIG. 10, the LTE may receive configuration information from a network or a TRP (S201). The configuration information may be related to LTL transmission, and may include configuration information (transform precoder enable/disable) about which of DFT-s-OFDM (discrete Fourier transform-spread-orthogonal frequency division multiplexing) and CP-OFDM is used for transmission of a LTL signal, and information about a maximum rank related to the UL transmission.

Specifically, the UE may transmit a UL signal using DFT-s-OFDM when the configuration information received from the network or TRP indicates DFT-s-OFDM (transform precoder enable). In this case, a precoding matrix indicator (TPMI) or TRI may be indicated to the UE based on a codebook corresponding to the DFT-s-OFDM.

Next, the LTE may receive DCI related to the UL signal from the network or TRP (S203). The LTE may receive an indication of a TPMI related to resource allocation for the UL signal and/or a precoding matrix to be applied to the UL signal, based on the DCI. That is, the UE may specify a precoding matrix to be applied to the UL signal based on the value of the TPMI field included in the DCI.

The codebook corresponding to the DFT-s-OFDM may include various precoding matrices for various ranks as shown in Tables 13 to 27. As described above, the codebook may include a non-coherent codebook subset, a partial-coherent codebook subset, and a full-coherent codebook subset according to the coherence capability of the UE. For example, when the UE reports or supports full-coherence capability, the UE may transmit an UL signal to which a precoding matrix indicated by the TPMI is applied based on the full-coherent codebook subset.

As described above, in UL transmission using the DFT-s-OFDM, it is necessary to support a precoding matrix of rank 2 or higher as well as a precoding matrix of rank 1. To this end, the full-coherent codebook subset (or the proposed full-coherent codebook subset) may additionally include precoding matrices of rank 2 based on Table 6 or 7.

Even when precoding matrices of rank 2 or higher are newly introduced, the payload of the existing DCI may be maintained. Specifically, some of the TPMIs corresponding to the existing full-coherent codebook subset may be used (or mapped) to indicate precoding matrices of the rank 2. To this end, it is necessary to discuss which TPMIs for precoding matrices among the TPMIs corresponding to the existing full-coherent codebook subset are to be used to indicate the precoding matrices of rank 2. As described above, among the precoding matrices included in the existing full-coherent codebook subset (i.e., the codebook subset for rank 1), some of the TPMIs indicating precoding matrices having a phase rotation relationship between antenna port groups may be reconfigured to indicate the precoding matrices for the rank 2.

For example, the existing full-coherent codebook subset may include 28 precoding matrices (indicated or mapped by TPMIs 0 to 27) for rank 1 as shown in Table 6 or Table 7. In this case, K TPMIs among the 28 TPMIs (existing TPMI subset) corresponding to the 27 precoding matrices for rank 1 may be mapped to the newly introduced precoding matrices for rank 2. In addition, reserved states (TPMIs corresponding thereto) in the existing full-coherent codebook subset may be additionally used as a TPMI subset for indicating the precoding matrices of rank 2. That is, the proposed full-coherent codebook subset may include N precoding matrices for rank 1 (or precoding matrices corresponding to N TPMIs), or include N-K precoding matrices for rank 1 and M (K+reserved states) precoding matrices for rank 2.

Specifically, based on the MAX rank (maximum rank) included in the configuration information, the UE may determine whether the TPMI indicated by the DCI corresponds to one of the TPMIs for the N precoding matrices, or corresponds to one of the TPMIs indicating each of the N-K precoding matrices for rank 1 and the M (K+reserved states) precoding matrices for rank 2. Here, N, K and M may be positive integers.

For example, when the configuration information indicates 1 as the maximum rank, the UE may determine that the TPMI indicated by the DCI indicates one of the TPMIs for the N precoding matrices. In contrast, when the configuration information indicates 2 as the maximum rank, the UE may determine that the TPMI indicates one of the TPMIs for the N-K precoding matrices for rank 1 and the TPMIs for the M precoding matrices for rank 2. That is, the LTE may determine whether some of the TPMIs indicating the precoding matrix for rank 1 are used to indicate precoding matrices for rank 2 based on the maximum rank.

Here, K precoding matrices to be excluded among the N precoding matrices for rank 1 when the maximum rank is indicated as 2 may be precoding matrices having a phase rotation relationship between port groups (e.g., a first port group of ports 1 and 3, and a second port group of ports 2 and 3) having coherency.

Specifically, the N precoding matrices for rank 1 may include 2K precoding matrices having a phase rotation relationship between port groups having coherency. Here, K precoding matrices (or first precoding matrices) may be indicated by the aforementioned first TPMI group, and the remaining K precoding matrices (or second precoding matrices) may be indicated by the aforementioned second TPMI group. For example, referring to Table 22, the 28 precoding matrices may include 16 precoding matrices having a phase rotation relationship between port groups having coherency (first precoding matrices indicated by TPMIs 12 to 19 (first TPMI group) and second precoding matrices indicated by TPMIs 20 to 27 (second TPMI group)). Here, the precoding matrices indicated by the first TPMI group and the precoding matrices indicated by the second TPMI group may have a phase rotation relationship between port groups and is subjected to phase rotation in different directions.

For example, referring to Table 22, 8 TPMIs (second TPMI group) indicating the second precoding matrices among the 28 TPMIs 0 to 27 indicating the precoding matrices for the rank 1 may be excluded, and the second TPMI group may be used to indicate precoding matrices for rank 2.

As such, TPMIs indicating the precoding matrices for rank 1 and rank 2 may be defined or configured within 5 bits as in the previous case.

Next, the LTE may transmit an LTL signal to which a precoding matrix corresponding to the TPMI field value (or TPMI) included in the DCI is applied to at least one TRP (S205).

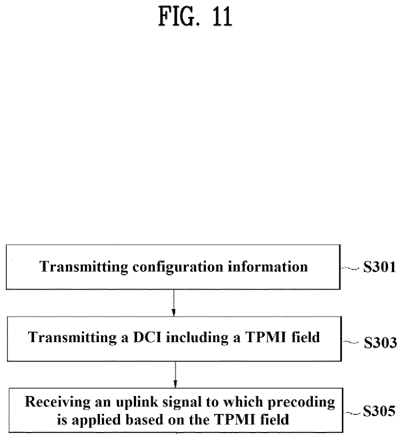

FIG. 11 is a diagram illustrating a method for receiving an uplink signal transmitted by a TRP based on a codebook.

Referring to FIG. 11, a TRP may transmit configuration information to a LTE (S301). The configuration information may be related to UL transmission, and may include configuration information (transform precoder enable/disable) about which of DFT-s-OFDM and CP-OFDM is used for transmission of a UL signal, and information about a maximum rank related to the LTL transmission.

Specifically, the TRP may configure the UE to use DFT-s-OFDM in the UL transmission through the configuration information. In this case, the TRP or network may indicate a TPMI or TRI based on a codebook corresponding to the DFT-s-OFDM.

Next, the network or TRP may transmit DCI related to the UL signal to the UE (S303). The network or TRP may indicate a TPMI related to resource allocation for the UL signal and/or a precoding matrix to be applied to the UL signal, based on the DCI. That is, the network or TRP may specify a precoding matrix to be applied to the UL signal to the UE through the value of the TPMI field included in the DCI.

The codebook corresponding to the DFT-s-OFDM may include various precoding matrices for respective ranks as shown in Tables 13 to 27. As described above, the codebook may include a non-coherent codebook subset, a partial-coherent codebook subset, and a full-coherent codebook subset according to the coherence capability of the UE. For example, when the LTE reports or supports full-coherence capability, the network or TRP may indicate a TPMI related to a precoding matrix to be applied by the LTE based on the full-coherent codebook subset.

Specifically, in order to additionally define rank 2 for DFT-s-OFDM, the full-coherent codebook subset (or the proposed full-coherent codebook subset) may additionally include precoding matrices for the rank 2 based on Table 6 or 7. In this regard, in order to maintain the payload of the DCI even when the precoding matrices for rank 2 are additionally defined, some of the TPMIs corresponding to the existing full-coherent codebook subset may be mapped to precoding matrices for the rank 2.

For example, the existing full-coherent codebook subset may include 28 precoding matrices (indicated or mapped by TPMIs 0 to 27) for rank 1 as shown in Table 6 or Table 7. In this case, K TPMIs among the 28 TPMIs (existing TPMI subset) corresponding to the 27 precoding matrices for rank 1 may be mapped to the newly introduced precoding matrices for rank 2. In addition, reserved states (TPMIs corresponding thereto) in the existing full-coherent codebook subset may also be used as a TPMI subset for indicating the precoding matrices of rank 2. That is, the proposed full-coherent codebook subset may include N precoding matrices for rank 1 (or precoding matrices corresponding to N TPMIs), or include N-K precoding matrices for rank 1 and M (K+reserved states) precoding matrices for rank 2.

Alternatively, based on the MAX rank (maximum rank) included in the configuration information, the network or TRP may indicate whether the TPMI indicated by the DCI is one of the TPMIs for the N precoding matrices, or one of the TPMIs indicating each of the N-K precoding matrices for rank 1 and the M (K+reserved states) precoding matrices for rank 2. Here, N, K and M may be positive integers.

For example, when the configuration information indicates 1 as the maximum rank, the network or TRP may indicate one of the TPMIs for the N precoding matrices through the DCI. In contrast, when the configuration information indicates 2 as the maximum rank is indicated as 2, the network or TRP may indicate one of the TPMIs for the N-K precoding matrices for rank 1 and the TPMIs for the M precoding matrices for rank 2 through the DCI. That is, when the maximum rank is indicated as 2, the network or TRP may use some of the TPMIs for the precoding matrices for rank 1 to indicate precoding matrices for rank 2.

Here, K precoding matrices to be excluded among the N precoding matrices for rank 1 when the maximum rank is indicated as 2 may be precoding matrices having a phase rotation relationship between port groups (e.g., a first port group of ports 1 and 3, and a second port group of ports 2 and 3) having coherency.

Specifically, the N precoding matrices for rank 1 may include 2K precoding matrices having a phase rotation relationship between port groups having coherency. Here, K precoding matrices (or first precoding matrices) may be indicated by the aforementioned first TPMI group, and the remaining K precoding matrices (or second precoding matrices) may be indicated by the aforementioned second TPMI group. For example, referring to Table 22, the 28 precoding matrices may include 16 precoding matrices having a phase rotation relationship between port groups having coherency (first precoding matrices indicated by TPMIs 12 to 19 (first TPMI group) and second precoding matrices indicated by TPMIs 20 to 27 (second TPMI group))

For example, referring to Table 22, 8 TPMIs (second TPMI group) indicating the second precoding matrices among the 28 TPMIs 0 to 27 indicating the precoding matrices for the rank 1 may be excluded, and the second TPMI group may be used to indicate precoding matrices for rank 2.

Next, the network or the TRP may receive an LTL signal to which a precoding matrix corresponding to the TPMI field value (or TPMI) included in the DCI is applied (S305).

## Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

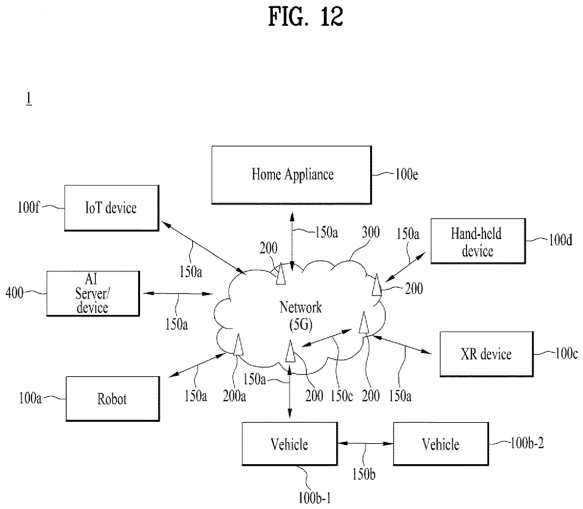

FIG. 12 illustrates a communication system applied to the present disclosure.

Referring to FIG. 12, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

## Examples of wireless devices to which the present disclosure is applied

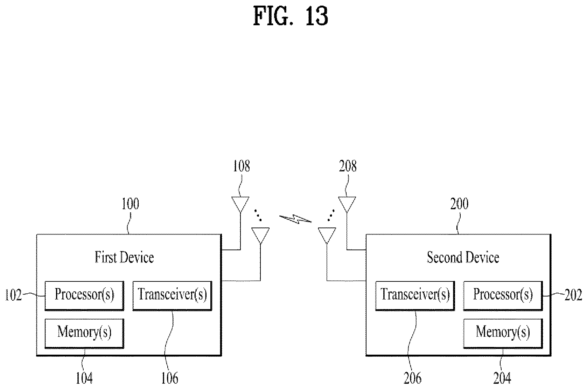

FIG. 13 illustrates a wireless device applicable to the present disclosure.

Referring to FIG. 13, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

According to one example, the first wireless device 100 may include a processor 102 connected to the RF transceiver, and a memory 104. The memory 104 may include at least one program capable of performing an operation related to the embodiments described with reference to FIGS. 8 to 11.

Specifically, the processor 102 may control the RF transceiver 106 to receive configuration information for configuring discrete Fourier transform-spread-orthogonal frequency division multiplexing (DFT-s-OFDM), and receive downlink control information (DCI) including a transmit precoding matrix indicator (TPMI) field, and transmit, to at least one transmission and reception point (TRP), the uplink signal configured by applying a precoding matrix corresponding to a TPMI included in the TPMI field. Here, when the configuration information indicates the maximum rank as 1, the TPMI may indicate one of N precoding matrices for rank 1. When the configuration information indicates the maximum rank as 2, the TPMI may indicate one of N-K precoding matrices for rank 1 and M precoding matrices for rank 2.

Alternatively, a chipset including the processor 102 and the memory 104 may be configured. In this case, the chipset may include at least one processor and at least one memory operatively connected to the at least one processor and configured to cause, when executed, the at least one processor to perform an operation. The operation may include receiving configuration information for configuring discrete Fourier transform-spread-orthogonal frequency division multiplexing (DFT-s-OFDM), receiving downlink control information (DCI) including a transmit precoding matrix indicator (TPMI) field included in the TPMI field, and transmitting an uplink signal configured by applying a precoding matrix corresponding to a TPMI included in the TPMI field to at least one transmission and reception point (TRP). Here, when the configuration information indicates the maximum rank as 1, the TPMI may indicate one of N precoding matrices for rank 1. When the configuration information indicates the maximum rank as 2, the TPMI may indicate one of N-K precoding matrices for rank 1 and M precoding matrices for rank 2. Also, the at least one processor may perform operations for the embodiments described with reference to FIGS. 8 to 11 based on a program included in the memory.

The codebook may include at least one of Tables 13 to 27.

Alternatively, a computer readable storage medium including at least one computer program causing the at least one processor to perform an operation may be provided. The operation may include receiving configuration information for configuring discrete Fourier transform-spread-orthogonal frequency division multiplexing (DFT-s-OFDM), receiving downlink control information (DCI) including a transmit precoding matrix indicator (TPMI) field included in the TPMI field, and transmitting an uplink signal configured by applying a precoding matrix corresponding to a TPMI included in the TPMI field to at least one transmission and reception point (TRP). Here, when the configuration information indicates the maximum rank as 1, the TPMI may indicate one of N precoding matrices for rank 1. When the configuration information indicates the maximum rank as 2, the TPMI may indicate one of N-K precoding matrices for rank 1 and M precoding matrices for rank 2. Also, the computer program may include programs capable of performing operations for the embodiments described with reference to FIGS. 8 to 11.

The codebook may include at least one of Tables 13 to 27.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

According to one embodiment, the BS or TRP may include a processor 202, a memory 204 and/or a transceiver 206. The processor may control the transceiver 206 or the RF transceiver to transmit configuration information for configuring discrete Fourier transform-spread-orthogonal frequency division multiplexing (DFT-s-OFDM), transmit downlink control information (DCI) including a transmit precoding matrix indicator (TPMI) field, and receive an uplink signal configured by applying a precoding matrix corresponding to a TPMI included in the TPMI field. Here, when the configuration information indicates the maximum rank as 1, the TPMI may indicate one of N precoding matrices for rank 1. When the configuration information indicates the maximum rank as 2, the TPMI may indicate one of N-K precoding matrices for rank 1 and M precoding matrices for rank 2. In addition, the processor may perform the above-described operations based on the memory 104 including at least one program capable of performing operations related to the embodiments described with reference to FIGS. 8 to 11.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

## Examples of application of wireless devices to which the present invention is applied

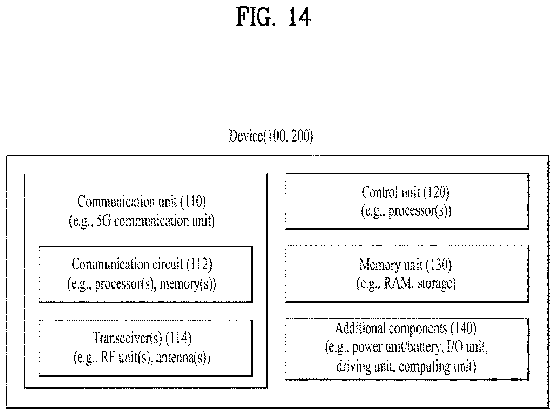

FIG. 14 illustrates another example of a wireless device applied to the present disclosure.

Referring to FIG. 14, wireless devices 100 and 200 may correspond to the wireless devices 100 and 200 of FIG. 13 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 13. For example, the transceiver(s) 114 may include the one or more transceivers 106 and 206 and/or the one or more antennas 108 and 208 of FIG. 13. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 12), the vehicles (100b-1 and 100b-2 of FIG. 12), the XR device (100c of FIG. 12), the hand-held device (100d of FIG. 12), the home appliance (100e of FIG. 12), the IoT device (100f of FIG. 12), a digital broadcast terminal, a hologram device, a public safety device, an MTC device, a medicine device, a fintech device (or a finance device), a security device, a climate/environment device, the AI server/device (400 of FIG. 12), the BSs (200 of FIG. 12), a network node, etc. The wireless device may be used in a mobile or fixed place according to a use-example/service.

In FIG. 14, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology can generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), or an access point. In addition, the terminal may be replaced with terms such as User Equipment (UE), Mobile Station (MS), or Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure.

[Industrial Applicability]

The above-described embodiments of the present disclosure are applicable to various mobile communication systems.

**Claims**

1.   A method for transmitting an uplink signal by a terminal based on a codebook in a wireless communication system, the method comprising:

     receiving configuration information for configuring discrete Fourier transform-spread-orthogonal frequency division multiplexing (DFT-s-OFDM);
     receiving downlink control information (DCI) including a transmit precoding matrix indicator (TPMI) field; and
     transmitting the uplink signal configured by applying a precoding matrix corresponding to a TPMI included in the TPMI field,

wherein, based on the configuration information indicating a maximum rank as 1, the TPMI indicates one of N precoding matrices for rank 1,

wherein, based on the configuration information indicating the maximum rank as 2, the TPMI indicates one of N-K precoding matrices for the rank 1 and M precoding matrices for rank 2,

wherein the N, K and M are positive integers.

2. The method of claim 1, wherein, based on the codebook comprising precoding matrices for four transmission ports and full-coherent, the DCI includes a TPMI field of 5 bits.

3. The method of claim 2, wherein the N precoding matrices comprise 2K precoding matrices having a phase rotation relationship between a first transmission port and a third transmission port having coherency and between a second antenna port and a fourth antenna port having coherency.

4. The method of claim 3, wherein the 2K precoding matrices are divided into a first subset including K precoding matrices and a second subset including K precoding matrices,
   wherein the N-K precoding matrices include only one of the first subset and the second subset.

5. The method of claim 2, wherein the K is 8.

6. The method of claim 2, wherein the M is determined based on the K and the number of reserved states in the TPMI field.

7. The method of claim 2, wherein the N is 28, the K is 8 and the M is 12.

8. The method of claim 2, wherein, based on the maximum rank being indicated as 2, the codebook comprises the following table:

| TPMI index | W | | | | | | | |
|---|---|---|---|---|---|---|---|---|
| 0 - 7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| 8 - 15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\-1\end{bmatrix}$ | $\frac{1}{2}\begin{bmatrix}1\\1\\j\\j\end{bmatrix}$ | $\frac{1}{2}\begin{bmatrix}1\\1\\-1\\1\end{bmatrix}$ | $\frac{1}{2}\begin{bmatrix}1\\1\\-j\\-j\end{bmatrix}$ |
| 16 - 23 | $\frac{1}{2}\begin{bmatrix}1\\j\\1\\j\end{bmatrix}$ | $\frac{1}{2}\begin{bmatrix}1\\j\\j\\1\end{bmatrix}$ | $\frac{1}{2}\begin{bmatrix}1\\j\\-1\\-j\end{bmatrix}$ | $\frac{1}{2}\begin{bmatrix}1\\j\\-j\\-1\end{bmatrix}$ | $\frac{1}{2}\begin{bmatrix}1&0\\0&1\\0&0\\0&0\end{bmatrix}$ | $\frac{1}{2}\begin{bmatrix}1&0\\0&0\\0&1\\0&0\end{bmatrix}$ | $\frac{1}{2}\begin{bmatrix}1&0\\0&0\\0&0\\0&1\end{bmatrix}$ | $\frac{1}{2}\begin{bmatrix}0&0\\1&0\\0&1\\0&0\end{bmatrix}$ |
| 24 - 31 | $\frac{1}{2}\begin{bmatrix}0&0\\1&0\\0&0\\0&1\end{bmatrix}$ | $\frac{1}{2}\begin{bmatrix}0&0\\0&0\\1&0\\0&1\end{bmatrix}$ | $\frac{1}{2}\begin{bmatrix}1&0\\0&1\\1&0\\0&-j\end{bmatrix}$ | $\frac{1}{2}\begin{bmatrix}1&0\\0&1\\1&0\\0&j\end{bmatrix}$ | $\frac{1}{2}\begin{bmatrix}1&0\\0&1\\-j&0\\0&1\end{bmatrix}$ | $\frac{1}{2}\begin{bmatrix}1&0\\0&1\\-j&0\\0&-1\end{bmatrix}$ | $\frac{1}{2}\begin{bmatrix}1&0\\0&1\\0&1\\1&0\end{bmatrix}$ | $\frac{1}{2}\begin{bmatrix}1&0\\0&1\\0&-1\\1&0\end{bmatrix}$ |

9. The method of claim 1, wherein a size of a payload of the TPMI field included in the DCI is determined based on a coherence capability of the terminal.

10. A method for receiving, by a transmission and reception point (TRP), an uplink signal transmitted based on a codebook in a wireless communication system, the method comprising:

   transmitting configuration information for configuring discrete Fourier transform-spread-orthogonal frequency division multiplexing (DFT-s-OFDM);
transmitting downlink control information (DCI) including a transmit precoding matrix indicator (TPMI) field; and
receiving the uplink signal configured by applying a precoding matrix corresponding to a TPMI included in the TPMI field,
wherein, based on the configuration information indicating a maximum rank as 1, the TPMI indicates one of N precoding matrices for rank 1,
wherein, based on the configuration information indicating the maximum rank as 2, the TPMI indicates one of N-K precoding matrices for the rank 1 and M precoding matrices for rank 2.

11. The method of claim 9, wherein, based on the codebook comprising precoding matrices for four transmission ports and full-coherent, the DCI includes a TPMI field of 6 bits.

12. A terminal for transmitting an uplink signal based on a codebook in a wireless communication system, the terminal comprising:

a radio frequency (RF) transceiver; and
a processor connected to the RF transceiver,
wherein the processor controls the RF transceiver to:

receive configuration information for configuring discrete Fourier transform-spread-orthogonal frequency division multiplexing (DFT-s-OFDM);
receive downlink control information (DCI) including a transmit precoding matrix indicator (TPMI) field; and
transmit, to at least one transmission and reception point (TRP), the uplink signal configured by applying a precoding matrix corresponding to a TPMI included in the TPMI field,
wherein, based on the configuration information indicating a maximum rank as 1, the TPMI indicates one of N precoding matrices for rank 1,
wherein, based on the configuration information indicating the maximum rank as 2, the TPMI indicates one of N-K precoding matrices for the rank 1 and M precoding matrices for rank 2.

13. A transmission and reception point (TRP) for receiving an uplink signal transmitted based on a codebook in a wireless communication system, the TRP comprising:

a radio frequency (RF) transceiver; and
a processor connected to the RF transceiver;
wherein the processor controls the RF transceiver to:

transmit configuration information for configuring discrete Fourier transform-spread-orthogonal frequency division multiplexing (DFT-s-OFDM);
transmit downlink control information (DCI) including a transmit precoding matrix indicator (TPMI) field; and
receive the uplink signal configured by applying a precoding matrix corresponding to a TPMI included in the TPMI field,
wherein, based on the configuration information indicating a maximum rank as 1, the TPMI indicates one of N precoding matrices for rank 1,
wherein, based on the configuration information indicating the maximum rank as 2, the TPMI indicates one of N-K precoding matrices for the rank 1 and M precoding matrices for rank 2.

14. A chipset for transmitting an uplink signal based on a codebook in a wireless communication system, the chipset comprising:

at least one processor; and
at least one memory operatively connected to the at least one processor and configured to cause, when executed, the at least one processor to perform an operation, the operation comprising:

receiving configuration information for configuring discrete Fourier transform-spread-orthogonal frequency division multiplexing (DFT-s-OFDM);
receiving downlink control information (DCI) including a transmit precoding matrix indicator (TPMI) field; and
transmitting, to at least one transmission and reception point (TRP), the uplink signal configured by applying a precoding matrix corresponding to a TPMI included in the TPMI field,

wherein, based on the configuration information indicating a maximum rank as 1, the TPMI indicates one of N precoding matrices for rank 1,

wherein, based on the configuration information indicating the maximum rank as 2, the TPMI indicates one of N-K precoding matrices for the rank 1 and M precoding matrices for rank 2.

15. A computer-readable storage medium including at least one computer program for performing an operation of transmitting an uplink signal based on a codebook in a wireless communication system, the storage medium comprising:

at least one computer program configured to cause the at least one processor to perform the operation of transmitting the uplink signal based on the codebook; and
a computer-readable storage medium storing the at least one computer program,
wherein the operation comprises:

receiving configuration information for configuring discrete Fourier transform-spread-orthogonal frequency division multiplexing (DFT-s-OFDM);
receiving downlink control information (DCI) including a transmit precoding matrix indicator (TPMI) field; and
transmitting, to at least one transmission and reception point (TRP), the uplink signal configured by applying a precoding matrix corresponding to a TPMI included in the TPMI field,
wherein, based on the configuration information indicating a maximum rank as 1, the TPMI indicates one of N precoding matrices for rank 1,
wherein, based on the configuration information indicating the maximum rank as 2, the TPMI indicates one of N-K precoding matrices for the rank 1 and M precoding matrices for rank 2.

# FIG. 1

# FIG. 2

AMF / UPF

AMF / UPF

50

50

NGC

NG - C/U

NG - C/U

NG - C/U

NG - C/U

40

40

40

Xn

gNB

gNB

NG - RAN

Xn

40

Xn

gNB

10

UE

# FIG. 3

# FIG. 4

# FIG. 5

```
┌──────────┐                                    ┌──────────────┐
│    UE    │                                    │ base station │
└──────────┘                                    └──────────────┘
     │                                                 │
     │                            ┌──────────────────┐ │
     │                            │ Downlink Scheduling│─── S1401
     │                            └──────────────────┘ │
     │                                                 │
     │◄──── DCI for downlink scheduling (PDCCH) ───────│ ─── S1402
     │                                                 │
     │──────── downlink data  (PDSCH) ────────────────►│ ─── S1403
     │                                                 │
```

# FIG. 6

UE

base staion

Uplink Scheduling — S1501

DCI for Uplink Scheduling (PDCCH) — S1502

uplink data (PUSCH) — S1503

# FIG. 7

| Base station | | User equipment |
|---|---|---|

Tx power related parameter/information → P05

Tx power related TPC command → P10

Determine Tx power for Uplink transmission — P15

Uplink transmission beased on determined Tx power → P20

# FIG. 8

TRP 1       TRP 2

layer group #1
for CW #1

layer group #2
for CW #1

UE 1

(a)

TRP 1       TRP 2

layer group #1
for CW #1

layer group #2
for CW #2

UE 1

(b)

# FIG. 9

# FIG. 10

| | |
|---|---|
| Receiving configuration information | ~ S201 |

| | |
|---|---|
| Receiving a DCI including a TPMI field | ~ S203 |

| | |
|---|---|
| Transmitting an uplink signal to which precoding is applied based on the TPMI field | ~ S205 |

# FIG. 11

| Transmitting configuration information | ~ S301 |

↓

| Transmitting a DCI including a TPMI field | ~ S303 |

↓

| Receiving an uplink signal to which precoding is applied based on the TPMI field | ~ S305 |

# FIG. 12

# FIG. 13

# FIG. 14

Device(100, 200)

| Communication unit (110) (e.g., 5G communication unit) | Control unit (120) (e.g., processor(s)) |
|---|---|
| Communication circuit (112) (e.g., processor(s), memory(s)) | Memory unit (130) (e.g., RAM, storage) |
| Transceiver(s) (114) (e.g., RF unit(s), antenna(s)) | Additional components (140) (e.g., power unit/battery, I/O unit, driving unit, computing unit) |

## INTERNATIONAL SEARCH REPORT

| International application No. |
| --- |
| **PCT/KR2021/012603** |

**A.    CLASSIFICATION OF SUBJECT MATTER**

**H04B 7/0456**(2017.01)i; **H04B 7/06**(2006.01)i; **H04L 25/03**(2006.01)i; **H04L 27/26**(2006.01)i

According to International Patent Classification (IPC) or to both national classification and IPC

**B.    FIELDS SEARCHED**

Minimum documentation searched (classification system followed by classification symbols)

H04B 7/0456(2017.01); H04B 7/0404(2017.01); H04B 7/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: DFT-s-OFDM(Discrete Fourier Transform-spread-Orthogonal Frequency Division Multiplexing), TPMI(Transmit Precoding Matrix Indicator), 프리코딩 매트릭스(precoding matrix), 랭크(rank), 업링크(uplink)

**C.    DOCUMENTS CONSIDERED TO BE RELEVANT**

| Category* | Citation of document, with indication, where appropriate, of the relevant passages | Relevant to claim No. |
| --- | --- | --- |
| Y | KR 10-2019-0084352 A (LG ELECTRONICS INC.) 16 July 2019 (2019-07-16)<br>  See paragraphs [0278], [0436]-[0438], [0532], [0611] and [0613]-[0614]; table 17; and figure 17. | 1-2,5-7,9-15 |
| A | | 3-4,8 |
| Y | US 2020-0274604 A1 (HUAWEI TECHNOLOGIES CO., LTD.) 27 August 2020 (2020-08-27)<br>  See paragraphs [0233] and [0241]-[0261]; and table 5. | 1-2,5-7,9-15 |
| A | KR 10-2020-0067873 A (TELEFONAKTIEBOLAGET LM ERICSSON(PUBL)) 12 June 2020 (2020-06-12)<br>  See paragraphs [0111]-[0202]; and tables 11-17. | 1-15 |
| A | ERICSSON. PUSCH coverage enhancement. R1-2006613, 3GPP TSG RAN WG1 Meeting #102-e. e-Meeting. 08 August 2020.<br>  See section 2.1.1. | 1-15 |

[✓] Further documents are listed in the continuation of Box C.        [✓] See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **16 December 2021** | **17 December 2021** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| International application No. |
| --- |
| **PCT/KR2021/012603** |

**C.  DOCUMENTS CONSIDERED TO BE RELEVANT**

| Category* | Citation of document, with indication, where appropriate, of the relevant passages | Relevant to claim No. |
| --- | --- | --- |
| A | NOKIA et al. Required changes to NR using existing DL/UL NR waveform. R1-2006907, 3GPP TSG RAN WG1 Meeting #102-e. e-Meeting. 07 August 2020. See section 2.4.4. | 1-15 |

Form PCT/ISA/210 (second sheet) (July 2019)

**INTERNATIONAL SEARCH REPORT**
Information on patent family members

International application No.

**PCT/KR2021/012603**

| Patent document cited in search report | | | Publication date (day/month/year) | Patent family member(s) | | | Publication date (day/month/year) |
|---|---|---|---|---|---|---|---|
| KR | 10-2019-0084352 | A | 16 July 2019 | AU | 2018-244982 | A1 | 08 August 2019 |
| | | | | AU | 2018-244982 | A8 | 03 October 2019 |
| | | | | AU | 2018-244982 | B2 | 22 April 2021 |
| | | | | BR | 112019020385 | A2 | 22 April 2020 |
| | | | | CA | 3052397 | A1 | 04 October 2018 |
| | | | | CL | 2019002530 | A1 | 31 January 2020 |
| | | | | CN | 110463066 | A | 15 November 2019 |
| | | | | EP | 3562052 | A1 | 30 October 2019 |
| | | | | JP | 2020-509677 | A | 26 March 2020 |
| | | | | KR | 10-1999355 | B1 | 11 July 2019 |
| | | | | KR | 10-2018-0135874 | A | 21 December 2018 |
| | | | | KR | 10-2158159 | B1 | 21 September 2020 |
| | | | | MX | 2019010023 | A | 07 February 2020 |
| | | | | PH | 12019502054 | A1 | 29 June 2020 |
| | | | | RU | 2720462 | C1 | 30 April 2020 |
| | | | | SG | 11201906429 | A | 27 August 2019 |
| | | | | US | 10958321 | B2 | 23 March 2021 |
| | | | | US | 2020-0083939 | A1 | 12 March 2020 |
| | | | | US | 2020-0287602 | A1 | 10 September 2020 |
| | | | | WO | 2018-182381 | A1 | 04 October 2018 |
| | | | | WO | 2018-182381 | A8 | 12 September 2019 |
| US | 2020-0274604 | A1 | 27 August 2020 | AU | 2018-368871 | A1 | 07 May 2020 |
| | | | | AU | 2018-368871 | B2 | 03 June 2021 |
| | | | | CN | 109803419 | A | 24 May 2019 |
| | | | | CN | 110073608 | A | 30 July 2019 |
| | | | | CN | 110073608 | B | 20 August 2021 |
| | | | | CN | 110366252 | A | 22 October 2019 |
| | | | | CN | 110366252 | B | 14 July 2020 |
| | | | | CN | 110708100 | A | 17 January 2020 |
| | | | | CN | 110708100 | B | 05 March 2021 |
| | | | | CN | 113597010 | A | 02 November 2021 |
| | | | | EP | 3528394 | A1 | 21 August 2019 |
| | | | | JP | 2020-504487 | A | 06 February 2020 |
| | | | | US | 10911125 | B2 | 02 February 2021 |
| | | | | WO | 2019-095620 | A1 | 23 May 2019 |
| KR | 10-2020-0067873 | A | 12 June 2020 | AU | 2018-367102 | A1 | 02 July 2020 |
| | | | | AU | 2018-367102 | B2 | 29 July 2021 |
| | | | | BR | 112020008535 | A2 | 20 October 2020 |
| | | | | CA | 3082555 | A1 | 23 May 2019 |
| | | | | CN | 111357208 | A | 30 June 2020 |
| | | | | EP | 3545626 | A1 | 02 October 2019 |
| | | | | EP | 3545626 | B1 | 23 September 2020 |
| | | | | EP | 3761520 | A1 | 06 January 2021 |
| | | | | EP | 3761520 | B1 | 26 May 2021 |
| | | | | ES | 2837420 | T3 | 30 June 2021 |
| | | | | HU | E052185 | T2 | 28 April 2021 |
| | | | | IL | 273968 | A | 31 May 2020 |
| | | | | JP | 2021-503732 | A | 12 February 2021 |
| | | | | KR | 10-2021-0138173 | A | 18 November 2021 |
| | | | | RU | 2745419 | C1 | 25 March 2021 |

Form PCT/ISA/210 (patent family annex) (July 2019)

## INTERNATIONAL SEARCH REPORT
### Information on patent family members

| International application No. |
|---|
| **PCT/KR2021/012603** |

| Patent document cited in search report | Publication date (day/month/year) | Patent family member(s) | Publication date (day/month/year) |
|---|---|---|---|
| | | WO 2019-096843 A1 | 23 May 2019 |

Form PCT/ISA/210 (patent family annex) (July 2019)